# EUROPEAN PATENT APPLICATION

(11) **EP 3 480 177 A1**
(43) Date of publication of application: **08.05.2019**
(21) Application number: 17819941.0
(22) Date of filing: 19.06.2017
(51) Int. Cl.: C03C 3/068, G02B 1/00

(54) **OPTICAL GLASS, PREFORM, AND OPTICAL ELEMENT**

(30) Priority: 29.06.2016 JP 2016129088; 29.06.2016 JP 2016129089; 28.04.2017 JP 2017090156; 28.04.2017 JP 2017090157
(71) Applicant: Ohara Inc., Chuo-ku Sagamihara-shi Kanagawa 252-5286 (JP)
(72) Inventor: OGINO, Michiko, Sagamihara-shi Kanagawa 252-5286 (JP); NAGAOKA, Atsushi, Sagamihara-shi Kanagawa 252-5286 (JP)
(74) Representative: Maiwald Patent- und Rechtsanwaltsgesellschaft mbH
(86) International application number: PCT/JP2017/022579
(87) International publication number: WO 2018/003582

(57) **Abstract**

The purpose of the present invention is to provide an optical glass that has optical characteristics including a high refractive index and low dispersion, that exhibits a low value with respect to the temperature coefficient of the relative refractive index thereof, and that can contribute to correcting the impact of changes in temperature on image formation characteristics. This optical glass contains, in mass%, more than 0% but no more than 30.0% of a SiO₂ component, more than 0% but no more than 35.0% of a B₂O₃ component, 20.0-63.0% of a BaO component, and at least one Ln₂O₃ component (in the formula, Ln is one or more substances selected from the group consisting of La, Gd, Y, and Yb). The optical glass has a refractive index (n_{d}) of 1.63 or more and an Abbe number (v_{d}) of 40-62. The temperature coefficient (40-60°C) of the relative refractive index (589.29 nm) is within the range of +3.0×10⁻⁶ to -10.0×10⁻⁶ (°C⁻¹).

## Description

### TECHNICAL FIELD

The present invention relates to an optical glass, a preform, and an optical element.

### BACKGROUND ART

In recent years, there has been an increase in the utilization in higher temperature environments of optical elements built into optical devices for vehicles such as vehicle cameras or the like, or optical elements built into optical devices which generate much heat such as projectors, copy machines, laser printers, broadcast devices and the like. In such high temperature environments, the temperature during use of the optical elements constituting an optical system may greatly fluctuate, and these temperatures may often exceed 100°C. At such times, the adverse effect on the imaging characteristics and the like of the optical system due to these temperature fluctuations becomes so large that it cannot be ignored, and as a result there is demand for constituting optical systems where effect on the imaging characteristics and the like due to temperature fluctuations does not readily occur.

As a material of an optical element constituting an optical system, the demand for high refractive index, low dispersion glass having a refractive index (n_{d}) of 1.63 or more, and an Abbe number (v_{d}) of 40 to 62 has greatly increased. As such a high refractive index, low dispersion glass, for example, glass compositions such as those represented by Patent Documents 1 to 3 are known.
Patent Document 1: Japanese Unexamined Patent Application, Publication No. S60-221338
Patent Document 2: Japanese Unexamined Patent Application, Publication No. H05-201743
Patent Document 3: Japanese Unexamined Patent Application, Publication No. 2005-179142

### DISCLOSURE OF THE INVENTION

### Problems to be Solved by the Invention

When constituting an optical system wherein temperature fluctuations do not readily affect the imaging characteristics and the like, the joint use of an optical element constituted from a glass with a negative temperature coefficient of the relative refractive index, whereby the refractive index becomes lower when the temperature increases, and an optical element constituted from a glass with a positive temperature coefficient of the relative refractive index, whereby the refractive index becomes higher when the temperature increases, is preferable from the point of correcting for the effect on the imaging characteristics and the like due to temperature fluctuations.

In particular, as a high refractive index, low dispersion glass having a having a refractive index (n_{d}) of 1.63 or more, and an Abbe number (v_{d}) of 40 to 62, from the viewpoint of contributing to correcting for the effect on the imaging characteristics due to temperature fluctuations, a glass with a low temperature coefficient of the relative refractive index is desired, more specifically, a glass with a negative temperature coefficient of the relative refractive index, or a glass having a small absolute value of the temperature coefficient of the relative refractive index, is desired.

In addition, a glass where tarnish does not readily occur when polishing processing a glass which was press-molded by a reheat press, or when polishing processing the glass to manufacture a preform material, or when cleaning a molded preform or an optical element, is desired.

The present invention was made in consideration of the above described problems, and the objective thereof is to provide an optical glass which has the optical characteristics of a high refractive index and low dispersion, and further which has a low value of the temperature coefficient of the relative refractive index, and can contribute to correcting the effect on the imaging characteristics of temperature fluctuations, and a preform and optical element using the same.

Further, the present invention has the objective of providing an optical glass which has the optical characteristics of a high refractive index and low dispersion, which can contribute to correcting the effect on the imaging characteristics of temperature fluctuations, and further, where tarnish does not readily occur when washing or polishing the glass, and a preform and optical element using the same. Means for Solving the Problems

The present inventors, as a result of repeated diligent research in order to solve the above described problems, discovered that by jointly using an SiO₂ component, B₂O₃ component, and a BaO component, with at least one of an Ln₂O₃ component, and adjusting the content of each component, it is possible to obtain the desired refractive index and Abbe number while having a low temperature coefficient of the relative refractive index, and thereby completed the present invention. Specifically, the present invention provides the following.
(1) An optical glass comprising, in mass%,
   an SiO₂ component of more than 0% to 30.0%,
   a B₂O₃ component of more than 0% to 35.0%,
   a BaO component of 20.0% to 63.0%,
   and comprising
   at least any of an Ln₂O₃ component (wherein Ln is one or more selected from the group consisting of La, Gd, Y, and Yb), having a refractive index (n_{d}) of 1.63 or more, and an Abbe number (v_{d}) of 40 to 62, and wherein
   a temperature coefficient (40 to 60°C) of a relative refractive index (589.29 nm), is within the range of +3.0 x 10⁻⁶ to - 10.0 x 10⁻⁶ (°C⁻¹).
(2) An optical glass according to (1), wherein, in mass%,
   an MgO component is 0 to 5.0%,
   a CaO component is 0 to 15.0%,
   an SrO component is 0 to 15.0%,
   a K₂O component is 0 to 10.0%,
   a TiO₂ component is 0 to 10.0%
   an Nb₂O₅ component is 0 to 10.0%
   a WO₃ component is 0 to 10.0%
   a ZrO₂ component is 0 to 10.0%
   a ZnO component is 0 to 10.0%
   a La₂O₃ component is 0 to 35.0%
   a Gd₂O₃ component is 0 to 25.0%
   a Y₂O₃ component is 0 to 25.0%
   a Yb₂O₃ component is 0 to 10.0%
   a Li₂O component is 0 to 3.0%
   an Na₂O component is 0 to 5.0%
   an Al₂O₃ component is 0 to 15.0%
   a Ga₂O₃ component is 0 to 10.0%
   a P₂O₅ component is 0 to 10.0%
   a GeO₂ component is 0 to 10.0%
   a Ta₂O₅ component is 0 to 5.0%
   a Bi₂O₃ component is 0 to 10.0%
   a TeO₂ component is 0 to 10.0%
   a SnO₂ component is 0 to 3.0%
   a Sb₂O₃ component is 0 to 1.0%,
   and
   wherein a content as F of a fluoride partially or completely substituting an oxide of one or two or more of each of the above elements is 0 to 10.0 mass%.
(3) An optical glass according to (1) or (2), wherein
   a total of the content of the SiO₂ component and the B₂O₃ component is 15.0% to 55.0%,
   a total of the content of an RO component is 25.0% to 65.0% (wherein R is one or more selected from the group consisting of Mg, Ca, Sr, and Ba),
   a total of the content of the Ln₂O₃ component is 10.0% to 45.0% (wherein Ln is one or more selected from the group consisting of La, Gd, Y, and Yb),
   a total of the content of an Rn₂O component is 10.0% or less (wherein Rn is one or more selected from the group consisting of Li, Na, and K).
(4) An optical glass according to any one of (1) to (3), wherein a total mass (RO + K₂O) is 25.0% to 65.0% (wherein R is at least one selected from the group consisting of Mg, Ca, Sr, and Ba).
(5) An optical glass according to any one of (1) to (4), wherein a total mass TiO₂ + Nb₂O₅ + WO₃ + ZrO₂ is 10.0% or less.
(6) An optical glass according to any one of (1) to (5), wherein a mass ratio (RO + K₂O) / (TiO₂ + Nb₂O₅ + WO₃ + ZrO₂ + SiO₂ + B₂O₃) is 1.00 to 3.00 (wherein R is at least one selected from the group consisting of Mg, Ca, Sr, and Ba).
(7) An optical glass according to any one of (1) to (6), wherein a mass ratio (SiO₂ + Al₂O₃ + TiO₂ + Nb₂O₅ + ZrO₂) /B₂O₃ is 0.20 or more.
(8) A preform consisting of the optical glass according to any one of (1) to (7).
(9) An optical element consisting of the optical glass according to any one of (1) to (7).
(10) An optical device provided with the optical element according to (9).

### Effects of the Invention

According to the present invention, it is possible to obtain an optical glass which has the optical characteristics of a high refractive index and low dispersion, and further has a low value of the temperature coefficient of the relative refractive index, and can contribute to correcting the effect on the imaging characteristics of temperature fluctuations, and a preform and optical element using the same.

Further, according to the present invention, it is also possible to obtain an optical glass which has the optical characteristics of a high refractive index and low dispersion, and further has a low value of the temperature coefficient of the relative refractive index, and which can contribute to correcting the effect on the imaging characteristics of temperature fluctuations, and where tarnish does not readily occur when cleaning or when polishing the optical glass, and a preform and optical element using the same.

### PREFERRED MODE FOR CARRYING OUT THE INVENTION

The optical glass of the present invention comprises, in mass%, an SiO₂ component of more than 0% to 30.0%, a B₂O₃ component of more than 0% to 35.0%, a BaO component of 20.0% to 63.0%, and comprises at least any of an Ln₂O₃ component (wherein Ln is one or more selected from the group consisting of La, Gd, Y, and Yb), having a refractive index (n_{d}) of 1.63 or more, and an Abbe number (v_{d}) of 40 to 62, and wherein a temperature coefficient (40 to 60°C) of a relative refractive index (589.29 nm), is within the range of +3.0 x 10⁻⁶ to -10.0 x 10⁻⁶ (°C⁻¹).

In particular, the first optical glass may be one which comprises, in mass%, an SiO₂ component of 5.0% to 30.0%, a B₂O₃ component of more than 0% to 25.0%, a BaO component of 38.0% to 63.0%, and comprises a total Ln₂O₃ component of 10.0% to 35.0% (wherein Ln is one or more selected from the group consisting of La, Gd, Y, and Yb), having a refractive index (n_{d}) of 1.65 or more, and an Abbe number (v_{d}) of 40 to 62, and wherein a temperature coefficient (40 to 60°C) of a relative refractive index (589.29 nm), is within the range of +2.0 x 10⁻⁶ to -10.0 x 10⁻⁶ (°C⁻¹).

Further, the second optical glass may be one which comprises, in mass%, an SiO₂ component of 5.0% to 30.0%, a B₂O₃ component of 3.0% to 30.0%, an La₂O₃ component of 2.0% to 35.0%, a BaO component of 20.0% to 60.0%,, having a refractive index (n_{d}) of 1.63 or more, and an Abbe number (v_{d}) of 40 to 62, and wherein a temperature coefficient (40 to 60°C) of a relative refractive index (589.29 nm), is within the range of +3.0 x 10⁻⁶ to -5.0 x 10⁻⁶ (°C⁻¹), wherein an chemical resistance (water resistance) by the powder method is class 1 to 3.

The optical glass of the present invention is one whereby, by joint use of an SiO₂ component, a B₂O₃ component, and a BaO component, with at least any of an Ln₂O₃ component, and adjusting the content of each component, has the desired refractive index and Abbe number, while having a low value of the temperature coefficient of the relative refractive index. Therefore, it is possible to obtain an optical glass which has the optical characteristics of a high refractive index and low dispersion, which further has a low value of the temperature coefficient of the relative refractive index, and which makes it possible to contribute to correcting the effect on the imaging characteristics due to temperature fluctuations.

In particular, in the second optical glass, by jointly using the SiO₂ component, B₂O₃ component, and La₂O₃ component, and BaO component, and adjusting the content of each component, the value of the temperature coefficient of the relative refractive index is low, while having the desired refractive index and Abbe number, and further, the water resistance is increased. Therefore, it becomes possible to obtain an optical glass which has the optical characteristics of a high refractive index and low dispersion, which further has a low value of the temperature coefficient of the relative refractive index, whereby it is possible to contribute to correcting for the effect on the imaging characteristics due to temperature fluctuations, and which does not readily tarnish when cleaning or polishing the glass.

Below, embodiments of the optical glass of the present invention are explained in detail. The present invention is not in any way limited by the following embodiments, and suitable modifications may be added within the scope of the objective of the invention. Further, where the explanations overlap, the explanations may be suitably abridged, but this does not limit the intent of the invention.

### [Glass Components]

The compositional range of each component constituting the optical glass of the present invention is explained below. In the present specification, the contents of each component is, unless particularly noted, are all shown as mass% with respect to the total mass of an oxide converted composition. Herein, "oxide converted composition" is the composition shown wherein each component comprised in the glass, with a total mass number of the corresponding generated oxides taken as 100 mass%, when the oxides, complex salts, metal fluorides and the like used as raw materials of the glass constituent components of the present invention are all decomposed and converted to oxides when melted.

### <Concerning the Required Components, Optional Components>

The SiO₂ component is a required component as a glass-forming oxide. In particular, by comprising more than 0% of the SiO₂ component, it is possible to increase the chemical resistance, in particular the water resistance, to increase the viscosity of the molten glass, and to reduce the coloration of the glass. Further, the stability of the glass is increased, and a glass which tolerates mass production can be readily obtained. Accordingly, the content of the SiO₂ component is preferably more than 0%, more preferably more than 1.0%, even more preferably 5.0% or more, even more preferably more than 6.0%, even more preferably more than 8.0%, even more preferably more than 9.0%, and even more preferably more than 10.0%. On the other hand, by making the content of the SiO₂ component 30.0% or less, the temperature coefficient of the relative refractive index can be made small, an increase in the glass transition point can be suppressed, and further, a reduction in the refractive index can be suppressed. Accordingly, the content of the SiO₂ component is preferably 30.0% or less, more preferably less than 27.0%, even more preferably less than 24.5%, even more preferably less than 24.0%, even more preferably less than 20.0%, and even more preferably less than 18.0%.

The B₂O₃ component is a required component as a glass-forming oxide. In particular, by comprising more than 0% of the B₂O₃ component, it is possible to reduce the devitrification of the glass, and to increase the Abbe number of the glass. Accordingly, the content of the B₂O₃ component is preferably more than 0%, more preferably more than 1.0%, even more preferably 3.0% or more, even more preferably more than 5.0%, even more preferably more than 7.0%, and even more preferably more than 10.0%. On the other hand, by making the content of the B₂O₃ component 35.0% or less, a greater refractive index can be readily obtained, the temperature coefficient of the relative refractive index can be made small, and further, deterioration of the chemical resistance can be suppressed. Accordingly, the content of the B₂O₃ component is preferably 35.0% or less, more preferably 30.0% or less, even more preferably 25.0% or less, even more preferably less than 22.0%, even more preferably less than 20.0%, even more preferably less than 18.0%, and even more preferably less than 17.0%.

The optical glass of the present invention comprises at least any of an Ln₂O₃ component (wherein Ln is one or more selected from the group consisting of La, Gd, Y, and Yb). Thereby, the refractive index and Abbe number of the glass can be increased, and therefore, and a glass having the desired refractive index and Abbe number can be readily obtained. Accordingly, the total content of the Ln₂O₃ component is preferably more than 0%, more preferably 10.0% or more, even more preferably more than 13.0%, even more preferably more than 15.0%, even more preferably more than 17.0%, even more preferably more than 18.0%, and even more preferably more than 19.0%. On the other hand, by making the content of the Ln₂O₃ component 45.0% or less, the liquidus temperature of the glass can be lowered, whereby the devitrification of the glass can be reduced. Further, it is possible to suppress greater than necessary increases of the Abbe number. Accordingly, the total content of the Ln₂O₃ component is preferably 45.0% or less, more preferably 40.0% or less, even more preferably 35.0% or less, even more preferably less than 32.0%, even more preferably less than 30.0%, even more preferably less than 29.0%, even more preferably less than 25.0%, and even more preferably less than 23.0%.

The BaO component is a required component which can increase the fusibility of the glass raw material, reduce the devitrification of the glass, increase the refractive index, and can make the temperature coefficient of the relative refractive index small. Accordingly, the total content of the BaO component is preferably 20% or more, more preferably 30.0% or more, even more preferably 35.0% or more, even more preferably 38.0% or more, even more preferably more than 38.0%, even more preferably more than 39.0%, even more preferably more than 40.0%, even more preferably more than 41.0%, even more preferably more than 42.0%, even more preferably more than 45.0%, and even more preferably more than 48.0%. On the other hand, by making the content of the BaO component 63.0% or less, reduction of the refractive index due to excessive content, or reduction of the chemical resistance (water resistance), and devitrification can be reduced. Accordingly, the total content of the BaO component is preferably 63.0% or less, even more preferably 60.0% or less, even more preferably less than 58.0%, even more preferably less than 55.0%, and even more preferably less than 51.0%.

The MgO component, CaO component, and SrO component are optional components, and when having a content of more than 0%, the refractive index and fusibility and devitrification resistance of the glass can be adjusted. On the other hand, by making the content of the MgO component 5.0% or less, or the content of the CaO component or SrO component 10.0% or less, it is possible to suppress reduction of the refractive index, and further it is possible to reduce devitrification due to excessive content of these components. Accordingly, the content of the MgO component is preferably 5.0% or less, more preferably less than 4.0%, even more preferably or more 3.0%, and even more preferably or more 1.0%. Further, the content of the CaO component and SrO component is preferably 15.0% or less, more preferably 10.0% or less, even more preferably less than 7.0%, even more preferably less than 4.0%, and even more preferably less than 1.0%.

The Li₂O component, Na₂O component, and K₂O component are optional components which, if having a content of more than 0%, can improve the fusibility of the glass, and can lower the glass transition point. In particular, if the K₂O component has a content of more than 0%, the temperature coefficient of the relative refractive index can be made small. On the other hand, by reducing the content of the Li₂O component, Na₂O component, and K₂O component, the refractive index of the glass is not readily reduced, and further it is possible to reduce the devitrification of the glass. Further, by reducing the content of the Li₂O component in particular, the viscosity of the glass can be increased, and the striation of the glass can be reduced. Accordingly, the content of the Li₂O component may be preferably 3.0% or less, more preferably less than 2.0%, even more preferably less than 1.1%, even more preferably less than 1.0%, even more preferably less than 0.6%, and even more preferably less than 0.3%. Further, the content of the Na₂O component may be preferably 5.0% or less, more preferably less than 3.0%, even more preferably less than 2.0%, and even more preferably less than 1.0%. Further, the content of the K₂O component may be preferably 10.0% or less, more preferably less than 7.0%, even more preferably less than 4.0%, and even more preferably less than 2.0%.

The TiO₂ component is an optional component which, if having a content of more than 0%, can increase the refractive index of the glass, and further, can reduce the devitrification of the glass. On the other hand, by making the content of the TiO₂ component 10.0% or less, the temperature coefficient of the relative refractive index can be made small, devitrification due to excessive content of the TiO₂ component can be reduced, and a reduction of the transmittance with respect to visible light (in particular wavelengths of 500 nm or less) of the glass can be suppressed. Further, in this way, it is possible to suppress a reduction in the Abbe number. Accordingly, the content of the TiO₂ component is preferably 10.0% or less, more preferably less than 5.0%, even more preferably less than 3.5%, even more preferably less than 2.0%, and even more preferably less than 1.0%.

The Nb₂O₅ component is an optional component which, if having a content of more than 0%, can increase the refractive index of the glass, and further can increase the devitrification resistance of the glass by reducing the liquidus temperature of the glass. On the other hand, by making the content of the Nb₂O₅ component 10.0% or less, the temperature coefficient of the relative refractive index can be made small, devitrification due to excessive content of the Nb₂O₅ component can be reduced, and further, a reduction of the transmittance with respect to visible light (in particular wavelengths of 500 nm or less) of the glass can be suppressed. Further, in this way, it is possible to suppress a reduction in the Abbe number. Accordingly, the content of the Nb₂O₅ component is preferably 10.0% or less, more preferably less than 5.0%, even more preferably less than 3.0%, and even more preferably less than 1.0%.

The WO₃ component is an optional component which, if having a content of more than 0%, can increase the refractive index, and reduce the glass transition point of the glass, while reducing coloration of the glass due to other high refractive index components, and can further reduce devitrification. On the other hand, by making the content of the WO₃ component 10.0% or less, the temperature coefficient of the relative refractive index can be made small, and further the material costs can be suppressed. Further, the coloration of the glass due to the WO₃ component can be reduced and the visible light transmittance can be increased. Accordingly, the content of the Nb₂O₅ component is preferably 10.0% or less, more preferably less than 5.0%, even more preferably less than 3.0%, even more preferably less than 1.0%, and even more preferably less than 0.5%.

The ZrO₂ component is an optional component which, if having a content of more than 0%, can increase the refractive index and the Abbe number of the glass, and further can reduce the devitrification. On the other hand, by making the content of the ZrO₂ component 10.0% or less, the temperature coefficient of the relative refractive index can be made small, and devitrification due to excessive content of the ZrO₂ component can be reduced. Accordingly, the content of the ZrO₂ component is preferably 10.0% or less, more preferably less than 8.0%, even more preferably less than 5.0%, and even more preferably less than 3.0%.

The ZnO component is an optional component which, if having a content of more than 0%, can increase the fusibility of the raw materials, can promote degassing from the molten glass, and further, can increase the stability of the glass. Further, it is a component which can reduce the glass transition point and further improve the chemical resistance. On the other hand, by making the content of the ZnO component 10.0% or less, the temperature coefficient of the relative refractive index can be made small, expansion due to heating can be reduced, lowering of the refractive index can be suppressed, and further, devitrification due to excessive lowering of the viscosity can be reduced. Accordingly, the content of the ZnO component is preferably 10.0% or less, more preferably less than 6.0%, even more preferably less than 4.5%, even more preferably less than 3.0%, even more preferably less than 2.5%, and even more preferably less than 1.0%.

The Y₂O₃ component is an optional component which, if having a content of more than 0%, can suppress raw material costs of the glass compared to other rare earth elements while maintaining a high refractive index and high Abbe number, and further can reduce the specific gravity of the glass more than other rare earth elements. On the other hand, by making the content of the Y₂O₃ component 25.0% or less, lowering of the refractive index of the glass can be suppressed, and further, the stability of the glass can be increased. Further, degradation of the fusibility of the glass raw materials can be suppressed. Accordingly, the content of the Y₂O₃ component may be preferably 25.0% or less, more preferably 20.0% or less, more preferably less than 15.0%, even more preferably less than 13.0%, even more preferably less than 10.0%, and even more preferably less than 5.0%.

The La₂O₃ component is an optional component which, if having a content of more than 0%, can increase the refractive index and Abbe number of the glass, and in particular, is a required component of the second optical glass. Accordingly, the content of the La₂O₃ component may be preferably more than 0%, more preferably 2.0% or more, even more preferably 5.0% or more, even more preferably more than 8.0%, even more preferably 10.0% or more, even more preferably more than 10.0%, even more preferably more than 13.0%, even more preferably more than 15.0%, even more preferably more than 17.0%, and even more preferably more than 19.0%. On the other hand, by making the content of the La₂O₃ component 25.0% or less, devitrification can be reduced by increasing the stability of the glass, and it is possible to suppress increasing the Abbe number more than necessary. Further, the fusibility of the glass raw materials can be increased. Accordingly, the content of the La₂O₃ component is preferably 35.0% or less, more preferably less than 30.0%, more preferably less than 28.0%, even more preferably less than 26.0%, even more preferably less than 25.0%, and even more preferably less than 23.0%.

The Gd₂O₃ component and Yb₂O₃ component are optional components which, if having a content of more than 0%, can increase refractive index of the glass. On the other hand, the Gd₂O₃ component and Yb₂O₃ component are costly materials even among rare earth elements, and if the content thereof is high, the production costs will increase. Further, by reducing the Gd₂O₃ component and Yb₂O₃ component, an increase of the Abbe number of the glass can be suppressed. Accordingly, the content of the Gd₂O₃ component and Yb₂O₃ component may be preferably 25.0% or less, more preferably less than 20.0%, more preferably less than 15.0%, even more preferably less than 10.0%, even more preferably less than 7.0%, even more preferably less than 4.0%, and even more preferably less than 1.0%. Further, the content of the Yb₂O₃ component may be preferably 10.0% or less, more preferably less than 5.0%, even more preferably less than 3.0%, and even more preferably less than 1.0%.

The Al₂O₃ component and the Ga₂O₃ component are optional components which, if having a content of more than 0%, can improve the chemical resistance (water resistance) of the glass, and further improve the devitrification resistance of the molten glass. Therefore, in particular the content of the Al₂O₃ component is preferably more than 0%, more preferably 0.5% or more, and even more preferably more than 1.0%. On the other hand, by making the content of the Al₂O₃ component 15.0% or less, or the content of the Ga₂O₃ component 10.0% or less, the liquidus temperature of the glass can be reduced, and the devitrification resistance can be increased. Accordingly, the content of the Al₂O₃ component may be preferably 15.0% or less, more preferably less than 10.0%, more preferably less than 6.0%, even more preferably less than 3.0%, even more preferably less than 2.0%, and even more preferably less than 1.0%. Further, the content of the Ga₂O₃ component is preferably 10.0% or less, more preferably less than 5.0%, even more preferably less than 3.0%, and even more preferably less than 1.0%.

The P₂O₅ component is an optional component which, if having a content of more than 0%, can reduce the liquidus temperature of the glass and increase the devitrification resistance. On the other hand, by making the content of the P₂O₅ component 10.0% or less, a reduction in the chemical resistance of the glass, in particular the water resistance, can be suppressed. Accordingly, the content of the P₂O₅ component may be preferably 10.0% or less, more preferably less than 5.0%, even more preferably less than 3.0%, and even more preferably less than 1.0%.

The GeO₂ component is an optional component which, if having a content of more than 0%, can increase the refractive index of the glass, and further, can improve the devitrification resistance. However, GeO₂ has a high raw material cost, and if the content thereof is high, the production costs increase. Accordingly, the content of the Ga₂O₃ component may be preferably 10.0% or less, more preferably less than 5.0%, even more preferably less than 3.0%, even more preferably less than 1.0%, and even more preferably less than 0.1%.

The Ta₂O₅ component is an optional component which, if having a content of more than 0%, can increase the refractive index of the glass, and further, can improve the devitrification resistance. On the other hand, by making the content of the Ta₂O₅ component 5.0% or less, the raw material cost of the optical glass can be reduced, and further, the melting temperature of the raw materials can be lowered, and the energy required to melt the raw materials can be reduced, whereby the production cost of the optical glass can be reduced. Accordingly, the content of the Ta₂O₅ component may be preferably 5.0% or less, more preferably less than 3.0%, even more preferably less than 1.0%, even more preferably less than 0.5%, and even more preferably less than 0.1%. In particular, from the viewpoint of reducing material cost, the Ta₂O₅ component is most preferably not comprised.

The Bi₂O₃ component is an optional component which, if having a content of more than 0%, can increase the refractive index of the glass, and further, can lower the glass transition point. On the other hand, by making the content of the Bi₂O₃ component 10.0% or less, the liquidus temperature of the glass can be lowered, and the devitrification resistance can be increased. Accordingly, the content of the Bi₂O₃ component may be preferably 10.0% or less, more preferably less than 5.0%, even more preferably less than 3.0%, and even more preferably less than 1.0%.

The TeO₂ component is an optional component which, if having a content of more than 0%, can increase the refractive index of the glass, and further, can lower the glass transition point. On the other hand, the TeO₂ component has the problem that it may alloy with the platinum when melting the glass raw materials in a platinum crucible or a melt tank which has components which contact the molten glass formed of platinum. Accordingly, the content of the TeO₂ component may be preferably 10.0% or less, more preferably less than 5.0%, even more preferably less than 3.0%, and even more preferably less than 1.0%.

The SnO₂ component is an optional component which, if having a content of more than 0%, can lower and refine the oxides of the glass, and further, can increase the visible light transmittance of the glass. On the other hand, by making the content of the SnO₂ component 3.0% or less, coloration of the glass due to reduction of the molten glass, or devitrification of the glass can be reduced. Further, because alloying between the SnO₂ component and the melting equipment (in particular precious metals such as Pt and the like) can be reduced, it is possible to obtain longer lifetime of the melting equipment. Accordingly, the content of the SnO₂ component is preferably 3.0% or less, more preferably less than 1.0%, even more preferably less than 0.5%, and even more preferably less than 0.1%.

The Sb₂O₃ component is an optional component which, if having a content of more than 0%, can degass the molten glass. On the other hand, by making the content of the SnO₂ component 1.0% or less, reduction of the transmittance in the short wavelength region of the visible light region, or solarization or reduction of the quality of the inner portion of the glass can be suppressed. Accordingly the content of the SnO₂ component may be preferably 1.0% or less, more preferably less than 0.5%, and even more preferably less than 0.2%.

Further, a component which clarifies and degasses the glass is not limited to the above described Sb₂O₃ component, and publicly known clarifiers and degassing agents in the field of glass production, and combinations thereof, may be used.

The F component is an optional component which, if having a content of more than 0%, can increase the Abbe number of the glass, lower the glass transition point, and further increase the devitrification resistance. However, if the content of the F component, namely the total amount as F of a fluoride partially or completely substituting an oxide of one or two or more of each of the above described metal elements, is more than 10.0%, the volatilization of the F component becomes large, and it becomes difficult to obtain stable optical constants, and it becomes difficult to obtain a homogenous glass. Further, the Abbe number is increased more than necessary. Accordingly, the content of the F component may be preferably 10.0% or less, more preferably less than 5.0%, even more preferably less than 3.0%, and even more preferably less than 1.0%.

The total of the content (total mass) of the RO components (in the formula, R is one or more selected from the group consisting of Mg, Ca, Sr, and Ba) is preferably 25.0% to 65.0%. In particular, by making the total mass of the RO component 25.0% or more, the devitrification of the glass is reduced, and further, the temperature coefficient of the relative refractive index can be made small. Accordingly, the total mass of the RO component is preferably 25.0% or more, more preferably 30.0% or more, even more preferably 35.0% or more, even more preferably more than 38.0%, even more preferably 40.0% or more, even more preferably more than 40.0%, even more preferably more than 41.0%, even more preferably more than 42.0%, even more preferably more than 45.0%, and even more preferably more than 48.0%. On the other hand, by making the total mass of the RO component 65.0% or less, reduction of the refractive index can be suppressed, and the stability of the glass can be increased. Accordingly, the total mass of the RO component is preferably 65.0% or less, more preferably less than 60.0%, even more preferably less than 57.0%, even more preferably less than 55.0%, and even more preferably less than 52.0%.

The total of the content (total mass) of the RO component (in the formula, R is one or more selected from the group consisting of Mg, Ca, Sr, and Ba), and the K₂O component is preferably 25.0% to 65.0%. In particular, by making the total mass of the total mass (RO + K₂O) 25.0% or more, the devitrification of the glass can be reduced, and further, the temperature coefficient of the relative refractive index can be made small. Accordingly, the total mass (RO + K₂O) is preferably 25.0% or more, more preferably 30.0% or more, even more preferably 35.0% or more, even more preferably more than 38.0%, even more preferably 40.0% or more, even more preferably more than 40.0%, even more preferably more than 41.0%, even more preferably more than 42.0%, even more preferably more than 45.0%, and even more preferably more than 48.0%. On the other hand, by making the total mass (RO + K₂O) 65.0% or less, reduction of the refractive index can be suppressed, and the stability of the glass can be increased. Accordingly, the total mass (RO + K₂O) is preferably 65.0% or less, more preferably less than 60.0%, even more preferably less than 57.0%, even more preferably less than 55.0%, and even more preferably less than 52.0%.

The total amount of the SiO₂ component and the B₂O₃ component is preferably 15.0% to 55.0%. In particular, by making the total amount 15.0% or more, a stable glass is easily obtained. Accordingly, the total mass (SiO₂ + B₂O₃) is preferably 15.0% or more, more preferably more than 18.0%, even more preferably more than 20.0%, even more preferably more than 23.0%, and even more preferably more than 25.0%. On the other hand, by making the total amount 55.0% or less, the temperature coefficient of the relative refractive index can be made small. Accordingly, the total mass (SiO₂ + B₂O₃) is preferably 55.0% or less, more preferably 50.0% or less, even more preferably 40.0% or less, even more preferably less than 35.0%, even more preferably less than 33.0%, even more preferably less than 32.0%, and even more preferably less than 30.0%.

The total amount (total mass) of the TiO₂ component, Nb₂O₅ component, WO₃ component, and ZrO₂ component is preferably 10.0% or less. In this way, the temperature coefficient of the relative refractive index can be made small. Accordingly, the total mass TiO₂ + Nb₂O₅ + WO₃ + ZrO₂ is preferably 10.0% or less, more preferably less than 7.0%, even more preferably 5.0% or less, and even more preferably 4.3% or less.

The ratio (mass ratio) of the total content of the TiO₂ component, Nb₂O₅ component, WO₃ component, ZrO₂ component, and ZnO component, with respect to the total content of the SiO₂ component and B₂O₃ component, is preferably greater than 0. By making this ratio large, the temperature coefficient of the relative refractive index can be made small. Accordingly, the mass ratio (TiO₂ + Nb₂O₅ + WO₃ + ZrO₂ + ZnO) / (SiO₂ +B₂O₃) is preferably more than 0, more preferably more than 0.05, and even more preferably more than 0.10. On the other hand, from the viewpoint of obtaining stable glass, this ratio may be preferably less than 0.50, more preferably less than 0.40, even more preferably less than 0.30, and even more preferably less than 0.20.

The ratio (mass ratio) of the total content of the RO component (in the formula, R is one or more selected from the group consisting of Mg, Ca, Sr, Ba) and the K₂O component to the total content of the TiO₂ component, Nb₂O₅ component, WO₃ component, ZrO₂ component, and ZnO component, SiO₂ component, and B₂O₃ component is preferably 1.00 to 3.00. By making this ratio large, the temperature coefficient of the relative refractive index can be made small. Accordingly, the mass ratio (RO + K₂O) / (TiO₂ + Nb₂O₅ + WO₃ + ZrO₂ + ZnO + SiO₂ +B₂O₃) is preferably 1.00 or more, more preferably more than 1.10, even more preferably more than 1.20, even more preferably more than 1.30, even more preferably more than 1.40, eve more preferably more than 1.50, and even more preferably 1.53 or more. On the other hand, from the viewpoint of obtaining stable glass, this ratio may be preferably 3.00 or less, more preferably less than 3.00, even more preferably less than 2.80, even more preferably less than 2.50, even more preferably less than 2.00, and even more preferably less than 1.80.

The total of the content (total mass) of the RnO₂ component (in the formula, Rn is one or more selected from the group consisting of Li, Na, and K) is preferably 10.0% or less. In this way, it is possible to suppress a reduction in the viscosity of the molten glass, the refractive index of the glass is not readily reduced, and further, devitrification of the glass can be reduced. Accordingly, the total mass of the RnO₂ component is preferably 10.0% or less, more preferably less than 7.0%, even more preferably less than 4.0%, and even more preferably less than 2.0%.

The ratio (mass ratio) of the total contained amount of the SiO₂ component, Al₂O₃ component, TiO₂ component, Nb₂O₅ component, and ZrO₂ component, with respect to the content of the B₂O₃ component is preferably 0.20 or more. By making this ratio large, the chemical resistance, in particular the water resistance of the glass can be increased. Accordingly, the mass ratio (SiO₂ + BaO + Al₂O₃ + TiO₂ + Nb₂O₅ + ZrO₂) /B₂O₃ is preferably 0.20 or more, more preferably more than 0.30, even more preferably more than 0.40, and even more preferably more than 0.45. On the other hand, from the viewpoint of obtaining stable glass, this ratio may be less than 6.00 or less, more preferably less than 5.00, and even more preferably less than 4.5.

### <Concerning the Components Which Should Not Be Contained>

Next, components which should not be included and components which are preferably not included in the optical glass of the present invention are explained.

Other components may be added as required within a range which does not harm the characteristics of the glass of the present invention. However, excluding Ti, Zr, Nb, W, La, Gd, Y, Yb, and Lu, various transition metal components of V, Cr, Mn, Fe, Co, Ni, Cu, Ag, Mo, and the like, even if respectively contained individually or combination in small amounts, have the property of coloring the glass, and giving rise to absorbance of specified wavelengths in the visible range, and therefore, in particular for optical glass used for wavelengths in the visible region, these are preferably substantially not included.

Further, lead compounds such as PbO and the like, and arsenic compounds such as As₂O₃ and the like are components having a high environmental load, and therefore should substantially not be included, namely, they are desirably not included at all except for unavoidable impurities.

Furthermore, in recent years there has been a tendency to avoid use of all of the components of Th, Cd, Tl, Os, Be, and Se as harmful chemical materials, and steps for environmental measures are required not only in the production steps of the glass, but also in the processing steps, up until the disposal after having made the product. Accordingly, in the case of focusing on environmental impact, it is preferable that these are substantially not included.

### [Production Method]

The optical glass of the present invention is manufactured, for example by a method such as the following. Namely, it is produced by uniformly mixing as raw materials of each of the above components, high purity raw materials usually used for optical glass such as oxides, hydroxides, carbonates, nitrates, fluorides, hydroxides, metaphosphates and the like, so that the each component is within the predetermined content range, charging the produced mixture into a platinum crucible, and after melting for 2 to 5 hours in a temperature range of 900 to 1500°C in an electric furnace in accordance with the degree of ease of melting the glass raw materials, with stirring and homogenizing, the temperature is lowered to a suitable level, casting in a mold, and annealing.

Herein, the optical glass of the present invention preferably does not use sulfates as a raw material. In this way, because degassing of the glass raw materials after melting is promoted, residual bubbles in the optical glass can be suppressed.

### <Properties>

The optical glass of the present invention has a high refractive index and a high Abbe number (low dispersion). In particular, the refractive index (n_{d}) of the optical glass of the present invention preferably has a lower limit of 1.63, more preferably 1.65, even more preferably 1.66, even more preferably 1.67, and even more preferably 1.68. This refractive index (n_{d}) preferably has an upper limit of 2.00, more preferably 1.90, even more preferably 1.80, and even more preferably 1.75. Further, the Abbe number (v_{d}) of the optical glass of the present invention preferably has a lower limit of 40, more preferably 45, even more preferably 47, and even more preferably 49. This Abbe number (v_{d}) preferably has an upper limit of 62, more preferably 60, even more preferably 57, even more preferably 55, and even more preferably 53. By having such a high refractive index, even when designing thinner optical elements, it is possible to obtain a large diffraction amount of light. Further, by having such a low dispersion, the divergence of the focus point (chromatic aberration) depending on the wavelength of the light when used as a single lens can be made small. Therefore, for example when constituting an optical system by combining with optical elements having a high dispersion (low Abbe number), it is possible to reduce aberrations of this optical system as a whole and design for high imaging characteristics and the like. In such a way, the optical glass of the present invention is useful for optical design, and in particular, when constituting an optical system, it is possible to design size reduction of the optical system even while designing high imaging characteristics and the like, and it is possible to broaden the degree of freedom in optical design.

The optical glass of the present invention has a low value of the temperature coefficient of the relative refractive index (dn/dT). More specifically, the temperature coefficient of the relative refractive index of the optical glass of the present invention preferably has an upper limit value of +3.0 x 10⁻⁶ °C⁻¹, more preferably +2.0 x 10⁻⁶ °C⁻¹, even more preferably +1.0 x 10⁻⁶ °C⁻¹, even more preferably 0, and even more preferably -1.0 x 10⁻⁶ °C⁻¹, and it is possible to obtain this upper limit or a lower value (on the minus side). On the other hand, the temperature coefficient of the relative refractive index of the optical glass of the present invention preferably has a lower limit of -10.0 x 10⁻⁶ °C⁻¹, more preferably -8.0 x 10⁻⁶ °C⁻¹, even more preferably -5.0 x 10⁻⁶ °C⁻¹, even more preferably -4.0 x 10⁻⁶ °C⁻¹, and even more preferably -3.0 x 10⁻⁶ °C⁻¹, and it is possible to obtain this lower limit or a higher value (on the plus side). Among these, glasses having a negative temperature coefficient of the relative refractive index are almost unknown, and this broadens the options for correcting deviations and the like of an image due to temperature changes. Further, a glass having a small absolute value of the temperature coefficient of the relative refractive index can be more easily corrected for deviations and the like of an image due to temperature changes. Accordingly, by having such a range of the temperature coefficient of the relative refractive index, it becomes possible to contribute to correction of deviations and the like of an image due to temperature changes. The temperature coefficient of the relative refractive index of the optical glass of the present invention,is a temperature coefficient of the refractive index for light having a wavelength of 589.29 nm in air having the same temperature of the optical glass, and shows the amount of change per 1°C (°C⁻¹) when changing the temperature from 40°C to 60°C.

The optical glass of the present invention preferably has a high water resistance. In particular, the chemical resistance (water resistance) according to the powder method of the glass based on JOGI06-1999 is preferably class 1 to 3, more preferably class 1 to 2, and most preferably class 1. In this way, when polishing the optical glass, tarnish of the glass due to an aqueous polishing fluid or cleaning fluid can be reduced, whereby it is easy to carry out production of optical elements from the glass. Herein, "water resistance" is resistance to erosion of the glass due to water, and this water resistance can be measured according to the "Measurement Method of Chemical Resistance of Optical Glass" JOGIS06-1999 by the Japan Optical Glass Manufacturers Association. Further, the "chemical resistance (water resistance) is class 1 to 3" means that a chemical resistance (water resistance) carried out according to JOGIS06-1999, by a reduction ratio of the mass of a test piece before and after measurement, is less than 0.25 mass%. Further, "class 1" of the chemical resistance (water resistance) means that the reduction ratio of the mass of a test piece before and after measurement is less than 0.05 mass%, "class 2" means that the reduction ratio of the mass of a test piece before and after measurement is 0.05 to less than 0.10 mass%, "class 3" means that the reduction ratio of the mass of a test piece before and after measurement is 0.10 to less than 0.25 mass%, "class 4" means that the reduction ratio of the mass of a test piece before and after measurement is 0.25 to less than 0.60 mass%, "class 5" means that the reduction ratio of the mass of a test piece before and after measurement is 0.60 to less than 1.10 mass%, and "class 6" means that the reduction ratio of the mass of a test piece before and after measurement is 1.10 mass% or more. Namely, a smaller the class number means that the glass has more excellent water resistance.

The optical glass of the present invention preferably has a small specific gravity. More specifically, the optical glass of the present invention preferably has a specific gravity of 5.00 or less. In this way, the mass of optical elements and optical devices using the same can be reduced, whereby it is possible to contribute to weight reduction of optical devices. Accordingly, the specific gravity of the optical glass of the present invention preferably has an upper limit of 5.00, more preferably 4.80, and even more preferably 4.50. Further, the specific gravity of the optical glass of the present invention often is generally 3.00 or more, more specifically 3.50 or more, and even more specifically 4.00 or more. The specific gravity of the optical glass of the present invention is measured based on "Measurement Method of Specific Gravity of Optical Glass" JOGIS05-1975 by the Japan Optical Glass Manufacturers Association.

### [Preform and Optical Element]

From the produced optical glass, for example, it is possible to manufacture a glass compact, using a polishing technique, or a technique of mold press molding such as reheat press molding or precision press molding or the like. Namely, it is possible to manufacture a glass compact by carrying out a mechanical process such as grinding and polishing or the like on the optical glass, or to manufacture a preform for mold press molding from the optical glass and manufacture a glass compact by carrying out a polishing technique after having carried out reheat press molding on this preform, or to manufacture a glass compact by carrying out precision press molding on a preform manufactured by carrying out an polishing technique or on a preform molded by a publicly known floating molding, or the like. Further, the technique of manufacturing the glass compact is not limited to these techniques.

In this way, the optical glass of the present invention is useful for a great variety of optical elements and optical designs. Among these, in particular, forming a preform from the optical glass of the present invention, carrying out reheat press molding or precision press molding or the like using this preform, and manufacturing an optical element such as a lens or prism or the like is preferable. In this way, it becomes possible to form a preform having a large diameter, whereby it is possible to design large form optical elements, while realizing high resolution and high precision imaging characteristics and projection characteristics when used in an optical device.

The glass compact consisting of the optical glass of the present invention can be used for applications of optical elements such as lenses, prisms, mirrors and the like, and can also be used for devices which readily reach high temperatures, typically optical devices for vehicles, or projectors or copiers or the like.

### EXAMPLES

The compositions of the Examples (No. A1 to No. A53, No. B1 to No. B40) and Comparative Examples (No. a to No. c) of the present invention and the results of the refractive index (n_{d}), Abbe number (v_{d}), temperature coefficient of the relative refractive index (dn/dT), water resistance, and specific gravity of these glasses are shown in Tables 1 to 14. Herein, the Examples (No. A1 to No. A53) may be taken as examples of the first optical glass, and Examples (No. B1 to No. B40) may be taken as examples of the second optical glass. Further, the below examples are provided only for exemplification, and these examples are in no way limiting.

The glasses of the examples of the present invention were all prepared by selecting high purity raw materials usually used for optical glass such as oxides, hydroxides, carbonates, nitrates, fluorides, hydroxides, metaphosphates and the like, respectively corresponding to the raw material of each component, weighed so as to have the proportions of the compositions of each example shown in the table, and after uniformly mixing, were charged into a platinum crucible, and after melting for 2 to 5 hours in a temperature range of 900 to 1500°C in an electric furnace in accordance with the degree of ease of melting the glass raw materials, after stirring and homogenizing, was cast in a mold, and annealed.

The refractive index (n_{d}) and Abbe number (v_{d}) of the glasses of the examples were measured based on JOGIS01-2003 by the Japan Optical Glass Manufacturers Association. Further, for the glasses used in the present measurements, the annealing temperature reduction rate was -25°C/hr, and an annealing furnace was used to carry out the treatment.

The temperature coefficient of the relative refractive index (dn/dT) of the glass of the examples is the measured value of the temperature coefficient of the relative refractive index when the temperature was changed from 40°C to 60°C for a wavelength of 589.29 nm, according to the interferometry method among the methods disclosed in "Measurement Method of Temperature Coefficient of the Relative Refractive Index of Optical Glass" JOGIS18-1994 by the Japan Optical Glass Manufacturers Association.

The water resistance of the glass of the examples was measured according to the "Measurement Method of Chemical Resistance of Optical Glass" JOGIS06-1999 by the Japan Optical Glass Manufacturers Association. Namely, a glass test specimen crushed to a granularity of 425 to 600 pm in a specific gravity flask was placed inside a platinum cage. The platinum cage was put in a quartz glass round bottom flask into which purified water (pH 6.5 to 7.5) had been added, and was treated for 60 min in boiling water. The reduction rate (mass%) of the glass sample after the treatment was calculated, and it was taken as class 1 when this reduction rate was less than 0.05, class 2 when this reduction rate was from 0.05 to less than 0.10, class 3 when this reduction rate was from 0.10 to less than 0.25, class 4 when this reduction rate was from 0.25 to less than 0.60, class 5 when this reduction rate was from 0.60 to less than 1.10, and class 6 when this reduction rate was 1.10 or more.

The specific gravity of the glass of the Examples was measured based on "Measurement Method of Specific Gravity of Optical Glass" JOGIS05-1975 by the Japan Optical Glass Manufacturers Association.

**[Table 1]**

| (Units: mass%) | Example | | | | | | | |
|---|---|---|---|---|---|---|---|---|
| | A1 | A2 | A3 | A4 | A5 | A6 | A7 | A8 |
| SiO₂ | 14.93 | 11.93 | 21.93 | 11.93 | 8.93 | 18.93 | 10.00 | 13.93 |
| B₂O₃ | 15.00 | 19.50 | 6.50 | 15.00 | 15.00 | 8.00 | 15.00 | 15.00 |
| BaO | 49.23 | 49.23 | 52.23 | 49.23 | 49.23 | 49.23 | 49.40 | 49.23 |
| MgO | | | | | | | | |
| CaO | | | | | | | | |
| SrO | | | | | | | | |
| K₂O | | | | 3.00 | | | | 1.00 |
| TiO₂ | | | | | | 3.00 | | |
| Nb₂O₅ | | | | | | | | |
| WO₃ | | | | | | | | |
| ZrO₂ | | | | | | | 2.00 | |
| ZnO | | | | | | | | |
| La₂O₃ | 19.25 | 19.25 | 19.25 | 19.25 | 19.25 | 19.25 | 22.00 | 19.25 |
| Gd₂O₃ | | | | | | | | |
| Y₂O₃ | | | | | | | | |
| Yb₂O₃ | | | | | | | | |
| Li₂O | | | | | | | | |
| Na₂O | | | | | | | | |
| Al₂O₃ | 1.50 | | | 1.50 | 7.50 | 1.50 | 1.50 | 1.50 |
| Bi₂O₃ | | | | | | | | |
| Sb₂O₃ | 0.10 | 0.10 | 0.10 | 0.10 | 0.10 | 0.10 | 0.10 | 0.10 |
| Total | 100.0 | 100.0 | 100.0 | 100.0 | 100.0 | 100.0 | 100.0 | 100.0 |
| La+Gd+Y+Yb | 19.25 | 19.25 | 19.25 | 19.25 | 19.25 | 19.25 | 22.00 | 19.25 |
| Mg+Ca+Sr+Ba | 49.23 | 49.23 | 52.23 | 49.23 | 49.23 | 49.23 | 49.40 | 49.23 |
| Mg+Ca+Sr+Ba+K | 0.00 | 0.00 | 0.00 | 0.00 | 0.00 | 0.11 | 0.08 | 0.00 |
| Si+B | 49.23 | 49.23 | 52.23 | 52.23 | 49.23 | 49.23 | 49.40 | 50.23 |
| Ti+Nb+W+Zr | 29.93 | 31.43 | 28.43 | 26.93 | 23.93 | 26.93 | 25.00 | 28.93 |
| (Mg+Ca+Sr+Ba+K)/ (Ti+Nb+W+Zr+Zn+Si+B) | 0.000 | 0.000 | 0.000 | 0.000 | 0.000 | 3.000 | 2.000 | 0.000 |
| (Ti+Nb+W+Zr+Zn)/(Si+B) | 1.645 | 1.566 | 1.837 | 1.940 | 2.058 | 1.645 | 1.830 | 1.736 |
| (Si+Al+Ti+Nb+Zr)/B | 1.095 | 0.612 | 3.373 | 0.895 | 1.095 | 2.928 | 0.900 | 1.028 |
| Li+Na+K | 0.00 | 0.00 | 0.00 | 3.00 | 0.00 | 0.00 | 0.00 | 1.00 |
| Refractive index (n_{d}) | 1.693 | 1.693 | 1.701 | 1.696 | 1.690 | 1.720 | 1.717 | 1.692 |
| Abbe number (ν_{d}) | 52.6 | 52.8 | 51.4 | 51.0 | 51.3 | 47.2 | 49.9 | 52.0 |
| Temperature coefficient of the relative refractive index [x 10⁻⁶°C⁻¹] | -1.4 | -1.4 | -2.3 | -2.6 | -1.7 | -1.7 | -2.0 | -1.9 |

**[Table 2]**

| (Units: mass%) | Example | | | | | | | |
|---|---|---|---|---|---|---|---|---|
| | A9 | A10 | A11 | A12 | A13 | A11 | A15 | A16 |
| SiO₂ | 14.43 | 10.43 | 11.93 | 11.93 | 11.93 | 10.93 | 11.93 | 8.93 |
| B₂O₃ | 15.00 | 15.00 | 15.00 | 15.00 | 13.00 | 15.00 | 12.00 | 15.00 |
| BaO | 45.23 | 53.73 | 49.23 | 49.23 | 52.23 | 52.23 | 52.23 | 52.23 |
| MgO | | | | | | | | |
| CaO | 2.00 | | | | | | | 3.00 |
| SrO | 2.00 | | | | | | 3.00 | |
| K₂O | | | | | | 1.00 | | |
| TiO₂ | | | | | | | | |
| Nb₂O₅ | | | 3.00 | | | | | |
| WO₃ | | | | | | | | |
| ZrO₂ | | | | | | | | |
| ZnO | | | | | | | | |
| La₂O₃ | 9.25 | 19.25 | 19.25 | 22.25 | 21.25 | 19.25 | 19.25 | 19.25 |
| Gd₂O₃ | 5.00 | | | | | | | |
| Y₂O₃ | 5.00 | | | | | | | |
| Yb₂O₃ | | | | | | | | |
| Li₂O | 0.50 | | | | | | | |
| Na₂O | | | | | | | | |
| Al₂O₃ | 1.50 | 1.50 | 1.50 | 1.50 | 1.50 | 1.50 | 1.50 | 1.50 |
| Bi₂O₃ | | | | | | | | |
| Sb₂O₃ | 0.10 | 0.10 | 0.10 | 0.10 | 0.10 | 0.10 | 0.10 | 0.10 |
| Total | 100.0 | 100.0 | 100.0 | 100.0 | 100.0 | 100.0 | 100.0 | 100.0 |
| La+Gd+Y+Yb | 19.25 | 19.25 | 19.25 | 22.25 | 21.25 | 19.25 | 19.25 | 19.25 |
| Mg+Ca+Sr+Ba | 49.23 | 53.73 | 49.23 | 49.23 | 52.23 | 52.23 | 55.23 | 55.23 |
| Mg+Ca+Sr+Ba+K | 0.00 | 0.00 | 0.11 | 0.00 | 0.00 | 0.00 | 0.00 | 0.00 |
| Si+B | 49.23 | 53.73 | 49.23 | 49.23 | 52.23 | 53.23 | 55.23 | 55.23 |
| Ti+Nb+W+Zr | 29.43 | 25.43 | 26.93 | 26.93 | 24.93 | 25.93 | 23.93 | 23.93 |
| (Mg+Ca+Sr+Ba+K)/ (Ti+Nb+W+Zr+Zn+Si+B) | 0.000 | 0.000 | 3.000 | 0.000 | 0.000 | 0.000 | 0.000 | 0.000 |
| (Ti+Nb+W+Zr+Zn)/(Si+B) | 1.673 | 2.113 | 1.645 | 1.828 | 2.095 | 2.053 | 2.308 | 2.308 |
| (Si+Al+Ti+Nb+Zr)/B | 1.062 | 0.795 | 1.095 | 0.895 | 1.033 | 0.828 | 1.119 | 0.695 |
| Li+Na+K | 0.50 | 0.00 | 0.00 | 0.00 | 0.00 | 1.00 | 0.00 | 0.00 |
| Refractive index (n_{d}) | 1.694 | 1.705 | 1.713 | 1.706 | 1.710 | 1.700 | 1.710 | 1.709 |
| Abbe number (ν_{d}) | 52.5 | 50.7 | 49.3 | 51.3 | 50.2 | 50.8 | 49.8 | 49.8 |
| Temperature coefficient of the relative refractive index [x 10⁻⁶°C⁻¹] | -1.3 | -2.8 | -1.6 | -2.2 | -2.4 | -2.8 | -2.5 | -2.6 |

**[Table 3]**

| (Units: mass%) | Example | | | | | | | |
|---|---|---|---|---|---|---|---|---|
| | A17 | A18 | A19 | A20 | A21 | A22 | A23 | A24 |
| SiO₂ | 8.93 | 11.93 | 11.93 | 11.18 | 8.93 | 11.93 | 11.93 | 13.93 |
| B₂O₃ | 15.00 | 13.00 | 15.00 | 16.50 | 15.00 | 15.00 | 15.00 | 15.00 |
| BaO | 49.23 | 49.23 | 49.23 | 51.48 | 49.23 | 49.23 | 49.23 | 49.23 |
| MgO | | | | | | | | |
| CaO | | | | | | | | |
| SrO | | | | | | | | |
| K₂O | | | | | | | | |
| TiO₂ | 3.00 | 3.00 | | | | | | |
| Nb₂O₅ | | | | 1.50 | | | | |
| WO₃ | | | | | | | | |
| ZrO₂ | | | | | | | | |
| ZnO | | | | | | | | |
| La₂O₃ | 22.25 | 21.25 | 19.25 | 19.25 | 25.25 | 19.25 | 19.25 | 19.25 |
| Gd₂O₃ | | | | | | 3.00 | | |
| Y₂O₃ | | | | | | | 3.00 | |
| Yb₂O₃ | | | | | | | | |
| Li₂O | | | | | | | | 1.00 |
| Na₂O | | | | | | | | |
| Al₂O₃ | 1.50 | 1.50 | 1.50 | | 1.50 | 1.50 | 1.50 | 1.50 |
| Bi₂O₃ | | | 3.00 | | | | | |
| Sb₂O₃ | 0.10 | 0.10 | 0.10 | 0.10 | 0.10 | 0.10 | 0.10 | 0.10 |
| Total | 100.0 | 100.0 | 100.0 | 100.0 | 100.0 | 100.0 | 100.0 | 100.0 |
| La+Gd+Y+Yb | 22.25 | 21.25 | 19.25 | 19.25 | 25.25 | 22.25 | 22.25 | 19.25 |
| Mg+Ca+Sr+Ba | 49.23 | 49.23 | 49.23 | 51.48 | 49.23 | 49.23 | 49.23 | 49.23 |
| Mg+Ca+Sr+Ba+K | 0.13 | 0.12 | 0.00 | 0.05 | 0.00 | 0.00 | 0.00 | 0.00 |
| Si+B | 49.23 | 49.23 | 49.23 | 51.48 | 49.23 | 49.23 | 49.23 | 49.23 |
| Ti+Nb+W+Zr | 23.93 | 24.93 | 26.93 | 27.68 | 23.93 | 26.93 | 26.93 | 28.93 |
| (Mg+Ca+Sr+Ba+K)/ (Ti+Nb+W+Zr+Zn+Si+B) | 3.000 | 3.000 | 0.000 | 1.500 | 0.000 | 0.000 | 0.000 | 0.000 |
| (Ti+Nb+W+Zr+Zn)/(Si+B) | 1.828 | 1.763 | 1.828 | 1.764 | 2.058 | 1.828 | 1.828 | 1.702 |
| (Si+Al+Ti+Nb+Zr)/B | 0.895 | 1.263 | 0.895 | 0.768 | 0.695 | 0.895 | 0.895 | 1.028 |
| Li+Na+K | 0.00 | 0.00 | 0.00 | 0.00 | 0.00 | 0.00 | 0.00 | 1.00 |
| Refractive index (n_{d}) | 1.732 | 1.728 | 1.705 | 1.709 | 1.718 | 1.706 | 1.705 | 1.695 |
| Abbe number (ν_{d}) | 46.0 | 46.3 | 49.8 | 50.1 | 50.1 | 51.3 | 51.2 | 52.1 |
| Temperature coefficient of the relative refractive index [x 10⁻⁶°C⁻¹] | -1.7 | -1.6 | -1.7 | -1.9 | -2.2 | -2.0 | -2.0 | -1.6 |

**[Table 4]**

| (Units: mass%) | Example | | | | | | | |
|---|---|---|---|---|---|---|---|---|
| | A25 | A26 | A27 | A28 | A29 | A30 | A31 | A32 |
| SiO₂ | 13.93 | 9.93 | 10.43 | 11.93 | 16.93 | 13.93 | 13.93 | 13.93 |
| B₂O₃ | 15.00 | 15.00 | 15.00 | 12.00 | 12.00 | 12.00 | 16.50 | 15.00 |
| BaO | 49.23 | 53.73 | 53.73 | 49.23 | 46.23 | 48.23 | 40.00 | 44.83 |
| MgO | | | | | 3.00 | | 3.00 | |
| CaO | | | | | | | | 3.00 |
| SrO | | | | | | | 6.23 | 1.50 |
| K₂O | | | | | 1.00 | 0.50 | 1.00 | 1.00 |
| TiO₂ | | | | 3.00 | | | | |
| Nb₂O₅ | | | | | | | | |
| WO₃ | | | | | | | | |
| ZrO₂ | | | | 1.00 | | | | |
| ZnO | | | | | | 1.00 | | |
| La₂O₃ | 19.25 | 19.25 | 10.00 | 3.00 | 6.25 | 19.25 | 14.25 | 19.25 |
| Gd₂O₃ | | | 9.25 | 3.25 | 13.00 | | | |
| Y₂O₃ | | | | 15.00 | | | 5.00 | |
| Yb₂O₃ | | | | 0.10 | | | | |
| Li₂O | | 0.50 | | | | | | |
| Na₂O | 1.00 | | | | | 0.50 | | |
| Al₂O₃ | 1.50 | 1.50 | 1.50 | 1.50 | 1.50 | 4.50 | 0.00 | 1.50 |
| Bi₂O₃ | | | | | | | | |
| Sb₂O₃ | 0.10 | 0.10 | 0.10 | | 0.10 | 0.10 | 0.10 | |
| Total | 100.0 | 100.0 | 100.0 | 100.0 | 100.0 | 100.0 | 100.0 | 100.0 |
| La+Gd+Y+Yb | 19.25 | 19.25 | 19.25 | 21.35 | 19.25 | 19.25 | 19.25 | 19.25 |
| Mg+Ca+Sr+Ba | 49.23 | 53.73 | 53.73 | 49.23 | 49.23 | 49.23 | 49.23 | 49.32 |
| Mg+Ca+Sr+Ba+K | 0.00 | 0.00 | 0.00 | 0.17 | 0.00 | 0.04 | 0.00 | 0.00 |
| Si+B | 49.23 | 53.73 | 53.73 | 49.23 | 50.23 | 49.73 | 50.23 | 50.32 |
| Ti+Nb+W+Zr | 28.93 | 24.93 | 25.43 | 23.93 | 28.93 | 25.93 | 30.43 | 28.93 |
| (Mg+Ca+Sr+Ba+K)/ (Ti+Nb+W+Zr+Zn+Si+B) | 0.000 | 0.000 | 0.000 | 4.000 | 0.000 | 0.000 | 0.000 | 0.000 |
| (Ti+Nb+W+Zr+Zn)/(Si+B) | 1.702 | 2.156 | 2.113 | 1.763 | 1.736 | 1.847 | 1.651 | 1.740 |
| (Si+Al+Ti+Nb+Zr)/B | 1.028 | 0.762 | 0.795 | 1.452 | 1.535 | 1.535 | 0.844 | 1.028 |
| Li+Na +K | 1.00 | 0.50 | 0.00 | 0.00 | 1.00 | 1.00 | 1.00 | 1.00 |
| Refractive index (n_{d}) | 1.692 | 1.706 | 1.701 | 1.730 | 1.691 | 1.690 | 1.686 | 1.691 |
| Abbe number (ν_{d}) | 52.0 | 50.5 | 51.2 | 46.0 | 51.9 | 51.0 | 52.1 | 52.0 |
| Temperature coefficient of the relative refractive index [x 10⁻⁶°C⁻¹] | -1.9 | -2.2 | -2.5 | -2.2 | -1.9 | -1.5 | -1.6 | -1.7 |

**[Table 5]**

| (Units: mass%) | Example | | | | | | | |
|---|---|---|---|---|---|---|---|---|
| | A33 | A34 | A35 | A36 | A37 | A38 | A39 | A40 |
| SiO₂ | 14.93 | 16.42 | 14.93 | 19.93 | 22.93 | 17.93 | 16.93 | 18.93 |
| B₂O₃ | 11.00 | 11.00 | 10.00 | 9.00 | 7.50 | 9.00 | 9.00 | 7.00 |
| BaO | 49.23 | 39.23 | 49.23 | 49.23 | 48.73 | 52.23 | 49.23 | 49.23 |
| MgO | | | | | | | | |
| CaO | | | | | | | | |
| SrO | | 10.00 | | | | | | |
| K₂O | | | | 1.00 | 1.50 | | | |
| TiO₂ | 3.00 | 1.00 | | | | | | |
| Nb₂O₅ | | | | | | | | |
| WO₃ | | | | | | | | |
| ZrO₂ | 1.00 | 3.00 | 4.00 | | | | 4.00 | 4.00 |
| ZnO | | | | | | | | |
| La₂O₃ | 19.25 | 19.25 | 19.25 | 19.25 | | 19.25 | 19.25 | 19.25 |
| Gd₂O₃ | | | | | | | | |
| Y₂O₃ | | | | | 19.25 | | | |
| Yb₂O₃ | | | | | | | | |
| Li₂O | | | | | | | | |
| Na₂O | | | | | | | | |
| Al₂O₃ | 1.50 | 0.00 | 2.50 | 1.50 | 0.00 | 1.50 | 1.50 | 1.50 |
| Bi₂O₃ | | | | | | | | |
| Sb₂O₃ | 0.10 | 0.10 | 0.10 | 0.10 | 0.10 | 0.10 | 0.10 | 0.10 |
| Total | 100.0 | 100.0 | 100.0 | 100.0 | 100.0 | 100.0 | 100.0 | 100.0 |
| La+Gd+Y+Yb | 19.25 | 19.25 | 19.25 | 19.25 | 19.25 | 19.25 | 19.25 | 19.25 |
| Mg+Ca+Sr+Ba | 49.23 | 49.23 | 49.23 | 49.23 | 48.73 | 52.23 | 49.23 | 49.23 |
| Mg+Ca+Sr+Ba+K | 0.15 | 0.15 | 0.16 | 0.00 | 0.00 | 0.00 | 0.15 | 0.15 |
| Si+B | 49.23 | 49.23 | 49.23 | 50.23 | 50.23 | 52.23 | 49.23 | 49.23 |
| Ti+Nb+W+Zr | 25.93 | 27.42 | 24.93 | 28.93 | 30.43 | 26.93 | 25.93 | 25.93 |
| (Mg+Ca+Sr+Ba+K)/ (Ti+Nb+W+Zr+Zn+Si+B) | 4.000 | 4.000 | 4.000 | 0.000 | 0.000 | 0.000 | 4.000 | 4.000 |
| (Ti+Nb+W+Zr+Zn)/(Si+B) | 1.645 | 1.567 | 1.702 | 1.736 | 1.651 | 1.940 | 1.645 | 1.645 |
| (Si+Al+Ti+Nb+Zr)/B | 1.857 | 1.857 | 2.142 | 2.381 | 3.057 | 2.158 | 2.492 | 3.489 |
| Li+Na+K | 0.00 | 0.00 | 0.00 | 1.00 | 1.50 | 0.00 | 0.00 | 0.00 |
| Refractive index (n_{d}) | 1.725 | 1.719 | 1.715 | 1.691 | 1.690 | 1.702 | 1.715 | 1.715 |
| Abbe number (ν_{d}) | 46.3 | 48.3 | 49.4 | 51.4 | 51.1 | 50.9 | 49.3 | 49.1 |
| Temperature coefficient of the relative refractive index [x 10⁻⁶°C⁻¹] | -1.8 | -1.7 | -1.7 | -1.9 | -2.1 | -2.7 | -1.6 | -1.6 |

**[Table 6]**

| (Units: mass%) | Example | | | | | | | |
|---|---|---|---|---|---|---|---|---|
| | A41 | A42 | A43 | A44 | A45 | A46 | A47 | A48 |
| SiO₂ | 15.93 | 17.93 | 13.86 | 14.93 | 10.43 | 10.32 | 16.26 | 9.13 |
| B₂O₃ | 11.00 | 9.00 | 10.95 | 10.00 | 15.00 | 14.85 | 8.91 | 20.52 |
| BaO | 49.23 | 49.23 | 48.98 | 49.23 | 53.73 | 53.19 | 53.19 | 41.43 |
| MgO | | | | | | | | |
| CaO | | | | | | | | |
| SrO | | | | | | | | |
| K₂O | | | 1.49 | | | 0.99 | 0.99 | |
| TiO₂ | | | | | | | | |
| Nb₂O₅ | | | | | | | | |
| WO₃ | | | | | | | | |
| ZrO₂ | 3.00 | 3.00 | 3.98 | 5.00 | | | | |
| ZnO | | | | | | | | |
| La₂O₃ | 19.25 | 19.25 | 19.15 | 19.25 | 10.00 | 9.90 | 9.90 | 24.71 |
| Gd₂O₃ | | | | | | 9.16 | 9.16 | |
| Y₂O₃ | | | | | 9.25 | | | 3.36 |
| Yb₂O₃ | | | | | | | | |
| Li₂O | | | | | | | | |
| Na₂O | | | | | | | | |
| Al₂O₃ | 1.50 | 1.50 | 1.49 | 1.50 | 1.50 | 1.49 | 1.49 | 0.75 |
| Bi₂O₃ | | | | | | | | |
| Sb₂O₃ | 0.10 | 0.10 | 0.10 | 0.10 | 0.10 | 0.10 | 0.10 | 0.10 |
| Total | 100.0 | 100.0 | 100.0 | 100.0 | 100.0 | 100.0 | 100.0 | 100.0 |
| La+Gd+Y+Yb | 19.25 | 19.25 | 19.15 | 19.25 | 19.25 | 19.06 | 19.06 | 28.07 |
| Mg+Ca+Sr+Ba | 49.23 | 49.23 | 48.98 | 49.23 | 53.73 | 53.19 | 53.19 | 41.43 |
| Mg+Ca+Sr+Ba+K | 0.11 | 0.11 | 0.16 | 0.20 | 0.00 | 0.00 | 0.00 | 0.00 |
| Si+B | 49.23 | 49.23 | 50.47 | 49.23 | 53.73 | 54.18 | 54.18 | 41.43 |
| Ti+Nb+W+Zr | 26.93 | 26.93 | 24.80 | 24.93 | 25.43 | 25.17 | 25.17 | 29.65 |
| (Mg+Ca+Sr+Ba+K)/ (Ti+Nb+W+Zr+Zn+Si+B) | 3.000 | 3.000 | 3.980 | 5.000 | 0.000 | 0.000 | 0.000 | 0.000 |
| (Ti+Nb+W+Zr+Zn)/(Si+B) | 1.645 | 1.645 | 1.754 | 1.645 | 2.113 | 2.152 | 2.152 | 1.397 |
| (Si+Al+Ti+Nb+Zr)/B | 1.857 | 2.492 | 1.766 | 2.142 | 0.795 | 0.795 | 1.992 | 0.482 |
| Li+Na+K | 0.00 | 0.00 | 1.49 | 0.00 | 0.00 | 0.99 | 0.99 | 0.00 |
| Refractive index (n_{d}) | 1.709 | 1.709 | 1.710 | 1.721 | 1.703 | 1.698 | 1.702 | 1.708 |
| Abbe number (ν_{d}) | 50.2 | 49.9 | 49.2 | 48.9 | 50.9 | 50.8 | 50.6 | 52.4 |
| Temperature coefficient of the relative refractive index [x 10⁻⁶°C⁻¹] | -1.6 | -1.4 | -1.5 | -1.5 | -2.6 | -2.7 | -2.4 | -0.8 |

**[Table 7]**

| (Units: mass%) | Example | | Comparative Example | |
|---|---|---|---|---|
| | A49 | A50 | a | b |
| SiO₂ | 15.06 | 14.93 | 17.18 | 7.70 |
| B₂O₃ | 16.66 | 11.00 | 21.61 | 31.37 |
| BaO | 46.98 | 49.23 | 22.14 | 2.00 |
| MgO | | | | |
| CaO | | | 7.23 | |
| SrO | | | | |
| K₂O | | | | |
| TiO₂ | | 5.10 | 3.18 | |
| Nb₂O₅ | | | | 0.60 |
| WO₃ | | | | |
| ZrO₂ | | | 3.81 | 6.00 |
| ZnO | | | 2.40 | 8.50 |
| La₂O₃ | 19.83 | 19.25 | 21.41 | 43.61 |
| Gd₂O₃ | | | | |
| Y₂O₃ | | | | |
| Yb₂O₃ | | | | |
| Li₂O | 0.24 | | 0.25 | 0.20 |
| Na₂O | | | | |
| Al₂O₃ | 1.12 | 0.50 | 0.75 | |
| Bi₂O₃ | | | | |
| Sb₂O₃ | 0.10 | | 0.06 | 0.02 |
| Total | 100.0 | 100.0 | 100.0 | 100.0 |
| La+Gd+Y+Yb | 19.83 | 19.25 | 21.41 | 43.61 |
| Mg+Ca+Sr+Ba | 46.98 | 49.23 | 29.36 | 2.00 |
| Mg+Ca+Sr+Ba+K | 0.00 | 0.20 | 29.36 | 2.00 |
| Si+B | 46.98 | 49.23 | 38.79 | 39.07 |
| Ti+Nb+W+Zr | 31.72 | 25.93 | 6.99 | 6.60 |
| (Mg+Ca+Sr+Ba+K)/ (Ti+Nb+W+Zr+Zn+Si+B) | 0.000 | 5.100 | 0.610 | 0.037 |
| (Ti+Nb+W+Zr+Zn)/(Si+B) | 1.481 | 1.587 | 0.242 | 0.386 |
| (Si+Al+Ti+Nb+Zr)/B | 0.972 | 1.866 | 1.153 | 0.456 |
| Li+Na+K | 0.24 | 0.00 | 0.25 | 0.20 |
| Refractive index (n_{d}) | 1.691 | 1.735 | 1.706 | 1.734 |
| Abbe number (ν_{d}) | 53.5 | 44.8 | 49.3 | 51.5 |
| Temperature coefficient of the relative refractive index [x 10⁻⁶°C⁻¹] | -0.5 | -1.9 | 3.2 | 6.3 |

**[Table 8]**

| (Units: mass%) | Example | | |
|---|---|---|---|
| | A51 | A52 | A53 |
| SiO₂ | 19.43 | 20.93 | 19.42 |
| B₂O₃ | 7.50 | 6.00 | 9.00 |
| BaO | 52.23 | 52.23 | 52.23 |
| MgO | | | |
| CaO | | | |
| SrO | | | |
| K₂O | | | |
| TiO₂ | 0.10 | 0.10 | 0.10 |
| Nb₂O₅ | | | |
| WO₃ | | | |
| ZrO₂ | | | |
| ZnO | | | |
| La₂O₃ | 19.25 | 19.25 | 19.25 |
| Gd₂O₃ | | | |
| Y₂O₃ | | | |
| Yb₂O₃ | | | |
| Li₂O | | | |
| Na₂O | | | |
| Al₂O₃ | 1.50 | 1.50 | |
| Bi₂O₃ | | | |
| Sb₂O₃ | 0.10 | 0.10 | 0.10 |
| Total | 100.0 | 100.0 | 100.0 |
| La+Gd+Y+Yb | 19.25 | 19.25 | 19.25 |
| Mg+Ca+Sr+Ba | 52.23 | 52.23 | 52.23 |
| Mg+Ca+Sr+Ba+K | 52.23 | 52.23 | 52.23 |
| Si+B | 26.93 | 26.93 | 28.42 |
| Ti+Nb+W+Zr | 0.10 | 0.10 | 0.10 |
| (Mg+Ca+Sr+Ba+K)/ (Ti+Nb+W+Zr+Zn+Si+B) | 1.93 | 1.93 | 1.83 |
| (Ti+Nb+W+Zr+Zn)/(Si+B) | 0.00 | 0.00 | 0.00 |
| (Si+Al+Ti+Nb+Zr)/B | 2.80 | 3.75 | 2.17 |
| Li+Na+K | 0.00 | 0.00 | 0.00 |
| Refractive index (n_{d}) | 1.702 | 1.702 | 1.703 |
| Abbe number (v_{d}) | 50.6 | 50.4 | 51.0 |
| Temperature coefficient of the relative refractive index [x 10⁻⁶°C⁻¹] | -1.3 | -1.3 | -1.4 |

**[Table 9]**

| (Units: mass%) | Example | | | | | | | |
|---|---|---|---|---|---|---|---|---|
| | B1 | B2 | B3 | B4 | B5 | B6 | B7 | B8 |
| SiO₂ | 14.93 | 8.93 | 11.93 | 10.00 | 11.93 | 11.93 | 11.93 | 9.12 |
| B₂O₃ | 15.00 | 15.00 | 15.00 | 15.00 | 15.00 | 15.00 | 13.00 | 20.49 |
| La₂O₃ | 4.25 | 19.25 | 19.25 | 22.00 | 19.25 | 19.25 | 21.25 | 24.68 |
| BaO | 49.23 | 49.23 | 49.23 | 49.40 | 49.23 | 49.23 | 49.23 | 41.36 |
| MgO | | | | | | | | |
| CaO | | | | | | | | |
| SrO | | | | | | | | |
| K₂O | | | | | | | | 0.26 |
| TiO₂ | | | 3.00 | | | | 3.00 | |
| Nb₂O₅ | | | | | 3.00 | | | |
| WO₃ | | | | | | | | |
| ZrO₂ | | | | 2.00 | | 3.00 | | |
| ZnO | | | | | | | | |
| Gd₂O₃ | 15.00 | | | | | | | |
| Y₂O₃ | | | | | | | | 3.35 |
| Yb₂O₃ | | | | | | | | |
| Li₂O | 0.10 | | | | | | | |
| Na₂O | | | | | | | | |
| Al₂O₃ | 1.50 | 7.50 | 1.50 | 1.50 | 1.50 | 1.50 | 1.50 | 0.75 |
| Sb₂O₃ | | 0.10 | 0.10 | 0.10 | 0.10 | 0.10 | 0.10 | |
| Total | 100.0 | 100.0 | 100.0 | 100.0 | 100.0 | 100.0 | 100.0 | 100.0 |
| Mg+Ca+Sr+Ba | 49.23 | 49.23 | 49.23 | 49.40 | 49.23 | 49.23 | 49.23 | 41.36 |
| Mg+Ca+Sr+Ba+K | 49.23 | 49.23 | 49.23 | 49.40 | 49.23 | 49.23 | 49.23 | 41.62 |
| Si+B | 29.93 | 23.93 | 26.93 | 25.00 | 26.93 | 26.93 | 24.93 | 29.61 |
| Ti+Nb+W+Zr | 0.00 | 0.00 | 3.00 | 2.00 | 3.00 | 3.00 | 3.00 | 0.00 |
| (Mg+Ca+Sr+Ba+K)/ (Ti +Nb+W+Zr+Zn+Si+B) | 1.645 | 2.058 | 1.645 | 1.830 | 1.645 | 1.645 | 1.763 | 1.406 |
| La+Gd+Y+Yb | 19.25 | 19.25 | 19.25 | 22.00 | 19.25 | 19.25 | 21.25 | 28.03 |
| Li+Na+K | 0.10 | 0.00 | 0.00 | 0.00 | 0.00 | 0.00 | 0.00 | 0.26 |
| (Si+Al+Ti+Nb+Zr)/B | 1.095 | 1.095 | 1.095 | 0.900 | 1.095 | 1.095 | 1.263 | 0.482 |
| (Ti+Nb+W+Zr+Zn)/(Si+B) | 0.000 | 0.000 | 0.111 | 0.080 | 0.111 | 0.111 | 0.120 | 0.000 |
| Refractive index (n_{d}) | 1.693 | 1.690 | 1.720 | 1.717 | 1.713 | 1.710 | 1.728 | 1.708 |
| Abbe number (ν_{d}) | 52.6 | 51.3 | 47.2 | 49.9 | 49.3 | 50.5 | 46.3 | 52.4 |
| Temperature coefficient of the relative refractive index [x 10⁻⁶°C⁻¹] | -1.4 | -1.7 | -1.7 | -2.0 | -1.6 | -1.4 | -2.0 | -0.5 |
| Specific gravity | 4.18 | 4.21 | 4.26 | 4.46 | 4.30 | 4.32 | 4.39 | 4.22 |
| Water resistance according to the powder method [class] | 3 | 3 | 3 | 3 | 2 | 2 | 2 | 3 |

**[Table 10]**

| (Units: mass%) | Example | | | | | | | |
|---|---|---|---|---|---|---|---|---|
| | B9 | B10 | B11 | B12 | B13 | B14 | B15 | B16 |
| SiO₂ | 11.93 | 11.93 | 16.93 | 13.93 | 17.93 | 14.93 | 16.42 | 14.93 |
| B₂O₃ | 12.00 | 12.00 | 12.00 | 12.00 | 8.00 | 11.00 | 11.00 | 11.00 |
| La₂O₃ | 21.25 | 21.25 | 19.25 | 19.25 | 19.25 | 19.25 | 14.25 | 19.25 |
| BaO | 49.23 | 49.23 | 49.23 | 49.23 | 49.23 | 49.23 | 49.23 | 49.23 |
| MgO | | | | | | | | |
| CaO | | | | | | | | |
| SrO | | | | | | | | |
| K₂O | | 1.00 | 1.00 | 1.10 | | | | |
| TiO₂ | 3.00 | 3.00 | | | 3.00 | 2.00 | 1.00 | |
| Nb₂O₅ | | | | | | | | |
| WO₃ | | | | | | | | |
| ZrO₂ | 1.00 | | | | 1.00 | 2.00 | 3.00 | 4.00 |
| ZnO | | | | | | | | |
| Gd₂O₃ | | | | | | | | |
| Y₂O₃ | | | | | | | 5.00 | |
| Yb₂O₃ | | | | | | | | |
| Li₂O | | | | | | | | |
| Na₂O | | | | | | | | |
| Al₂O₃ | 1.50 | 1.50 | 1.50 | 4.50 | 1.50 | 1.50 | | 1.50 |
| Sb₂O₃ | 0.10 | 0.10 | 0.10 | | 0.10 | 0.10 | 0.10 | 0.10 |
| Total | 100.0 | 100.0 | 100.0 | 100.0 | 100.0 | 100.0 | 100.0 | 100.0 |
| Mg+Ca+Sr+Ba | 49.23 | 49.23 | 49.23 | 49.23 | 49.23 | 49.23 | 49.23 | 49.23 |
| Mg+Ca+Sr+Ba+K | 49.23 | 50.23 | 50.23 | 50.33 | 49.23 | 49.23 | 49.23 | 49.23 |
| Si+B | 23.93 | 23.93 | 28.93 | 25.93 | 25.93 | 25.93 | 27.42 | 25.93 |
| Ti+Nb+W+Zr | 4.00 | 3.00 | 0.00 | 0.00 | 4.00 | 4.00 | 4.00 | 4.00 |
| (Mg+Ca+Sr+Ba+K)/ (Ti+Nb+W+Zr+Zn+Si+B) | 1.763 | 1.865 | 1.736 | 1.941 | 1.645 | 1.645 | 1.566 | 1.645 |
| La+Gd+Y+Yb | 21.25 | 21.25 | 19.25 | 19.25 | 19.25 | 19.25 | 19.25 | 19.25 |
| Li+Na+K | 0.00 | 1.00 | 1.00 | 1.10 | 0.00 | 0.00 | 0.00 | 0.00 |
| (Si+Al+Ti+Nb+Zr)/B | 1.452 | 1.369 | 1.535 | 1.535 | 2.928 | 1.857 | 1.857 | 1.857 |
| (Ti+Nb+W+Zr+Zn)/(Si+B) | 0.167 | 0.125 | 0.000 | 0.000 | 0.154 | 0.154 | 0.146 | 0.154 |
| Refractive index (n_{d}) | 1.728 | 1.735 | 1.691 | 1.690 | 1.725 | 1.722 | 1.719 | 1.715 |
| Abbe number (ν_{d}) | 45.9 | 45.6 | 51.9 | 51.2 | 46.3 | 47.4 | 48.3 | 49.4 |
| Temperature coefficient of the relative refractive index [x 10⁻⁶°C⁻¹] | -2.2 | -2.5 | -1.9 | -2.2 | -1.8 | -1.7 | -1.7 | -1.7 |
| Specific gravity | 4.44 | 4.40 | 4.17 | 4.19 | 4.30 | 4.32 | 4.34 | 4.36 |
| Water resistance according to the powder method [class] | 2 | 3 | 3 | 3 | 1 | 2 | 2 | 2 |

**[Table 11]**

| (Units: mass%) | Example | | | | | | | |
|---|---|---|---|---|---|---|---|---|
| | B17 | B18 | B19 | B20 | B21 | B22 | B23 | B24 |
| SiO₂ | 19.93 | 22.93 | 17.93 | 16.93 | 18.93 | 17.93 | 13.86 | 16.26 |
| B₂O₃ | 9.00 | 6.00 | 9.00 | 9.00 | 7.00 | 9.00 | 10.95 | 8.91 |
| La₂O₃ | 19.25 | 19.25 | 19.25 | 19.25 | 19.25 | 19.25 | 19.15 | 9.90 |
| BaO | 49.23 | 49.23 | 52.23 | 49.23 | 49.23 | 49.23 | 48.98 | 53.19 |
| MgO | | | | | | | | |
| CaO | | | | | | | | |
| SrO | | | | | | | | |
| K₂O | 1.00 | 1.00 | | | | | 1.49 | 0.99 |
| TiO₂ | | | | | | | | |
| Nb₂O₅ | | | | | | | | |
| WO₃ | | | | | | | | |
| ZrO₂ | | | | 4.00 | 4.00 | 3.00 | 3.98 | |
| ZnO | | | | | | | | |
| Gd₂O₃ | | | | | | | | 9.16 |
| Y₂O₃ | | | | | | | | |
| Yb₂O₃ | | | | | | | | |
| Li₂O | | | | | | | | |
| Na₂O | | | | | | | | |
| Al₂O₃ | 1.50 | 1.50 | 1.50 | 1.50 | 1.50 | 1.50 | 1.49 | 1.49 |
| Sb₂O₃ | 0.10 | 0.10 | 0.10 | 0.10 | 0.10 | 0.10 | 0.10 | 0.10 |
| Total | 100.0 | 100.0 | 100.0 | 100.0 | 100.0 | 100.0 | 100.0 | 100.0 |
| Mg+Ca+Sr+Ba | 49.23 | 49.23 | 52.23 | 49.23 | 49.23 | 49.23 | 48.98 | 53.19 |
| Mg+Ca+Sr+Ba+K | 50.23 | 50.23 | 52.23 | 49.23 | 49.23 | 49.23 | 50.47 | 54.18 |
| Si+B | 28.93 | 28.93 | 26.93 | 25.93 | 25.93 | 26.93 | 24.80 | 25.17 |
| Ti+Nb+W+Zr | 0.00 | 0.00 | 0.00 | 4.00 | 4.00 | 3.00 | 3.98 | 0.00 |
| (Mg+Ca+Sr+Ba+K)/ (Ti+Nb+W+Zr+Zn+Si+B) | 1.736 | 1.736 | 1.940 | 1.645 | 1.645 | 1.645 | 1.754 | 2.152 |
| La+Gd+Y+Yb | 19.25 | 19.25 | 19.25 | 19.25 | 19.25 | 19.25 | 19.15 | 19.06 |
| Li+Na+K | 1.00 | 1.00 | 0.00 | 0.00 | 0.00 | 0.00 | 1.49 | 0.99 |
| (Si+Al+Ti+Nb+Zr)/B | 2.381 | 4.071 | 2.158 | 2.492 | 3.489 | 2.492 | 1.766 | 1.992 |
| (Ti+Nb+W+Zr+Zn)/(Si+B) | 0.000 | 0.000 | 0.000 | 0.154 | 0.154 | 0.111 | 0.160 | 0.000 |
| Refractive index (n_{d}) | 1 .691 | 1.690 | 1.702 | 1.715 | 1.715 | 1.709 | 1.710 | 1.702 |
| Abbe number (ν_{d}) | 51.4 | 51.1 | 50.9 | 49.3 | 49.1 | 49.9 | 49.2 | 50.6 |
| Temperature coefficient of the relative refractive index [x 10⁻⁶°C⁻¹] | -1.9 | -1.8 | -2.7 | -1.6 | -1.6 | -1.5 | -2.0 | -2.6 |
| Specific gravity | 4.16 | 4.15 | 4.33 | 4.35 | 4.34 | 4.30 | 4.33 | 4.38 |
| Water resistance according to the powder method [class] | 2 | 2 | 3 | 1 | 1 | 1 | 3 | 3 |

**[Table 12]**

| (Units: mass%) | Example | | | | | | | |
|---|---|---|---|---|---|---|---|---|
| | B25 | B26 | B27 | B28 | B29 | B30 | B31 | B32 |
| SiO₂ | 22.06 | 16.19 | 19.15 | 23.18 | 24.06 | 14.14 | 19.93 | 11.93 |
| B₂O₃ | 9.66 | 16.66 | 10.50 | 9.66 | 7.66 | 15.51 | 9.00 | 15.00 |
| La₂O₃ | 19.83 | 19.83 | 24.71 | 19.83 | 19.83 | 24.71 | 19.25 | 19.25 |
| BaO | 46.98 | 46.98 | 41.43 | 46.98 | 46.98 | 41.43 | 49.23 | 40.23 |
| MgO | | | | | | | | |
| CaO | | | | | | | | |
| SrO | | | | | | | | 9.00 |
| K₂O | | 0.24 | | 0.24 | | | 1.00 | |
| TiO₂ | | | | | | | | |
| Nb₂O₅ | | | | | | | | |
| WO₃ | | | | | | | | |
| ZrO₂ | | | | | | | | 3.00 |
| ZnO | | | | | | | | 1.50 |
| Gd₂O₃ | | | | | | | | |
| Y₂O₃ | | | 3.36 | | | 3.36 | | |
| Yb₂O₃ | | | | | | | | |
| Li₂O | 0.24 | | | | 0.24 | | | |
| Na₂O | | | | | | | | |
| Al₂O₃ | 1.12 | | 0.75 | | 1.12 | 0.75 | 1.50 | |
| Sb₂O₃ | 0.10 | 0.10 | 0.10 | 0.10 | 0.10 | 0.10 | 0.10 | 0.10 |
| Total | 100.0 | 100.0 | 100.0 | 100.0 | 100.0 | 100.0 | 100.0 | 100.0 |
| Mg+Ca+Sr+Ba | 46.98 | 46.98 | 41.43 | 46.98 | 46.98 | 41.43 | 49.23 | 49.23 |
| Mg+Ca+Sr+Ba+K | 46.98 | 47.22 | 41.43 | 47.22 | 46.98 | 41.43 | 50.23 | 49.23 |
| Si+B | 31.72 | 32.84 | 29.65 | 32.84 | 31.72 | 29.65 | 28.93 | 26.93 |
| Ti+Nb+W+Zr | 0.00 | 0.00 | 0.00 | 0.00 | 0.00 | 0.00 | 0.00 | 3.00 |
| (Mg+Ca+Sr+Ba+K)/ (Ti+Nb+W+Zr+Zn+Si+B) | 1.481 | 1.438 | 1.397 | 1.438 | 1.481 | 1.397 | 1.736 | 1.566 |
| La+Gd+Y+Yb | 19.83 | 19.83 | 28.07 | 19.83 | 19.83 | 28.07 | 19.25 | 19.25 |
| Li+Na+K | 0.24 | 0.24 | 0.00 | 0.24 | 0.24 | 0.00 | 1.00 | 0.00 |
| (Si+Al+Ti+Nb+Zr)/B | 2.400 | 0.972 | 1.895 | 2.400 | 3.287 | 0.960 | 2.381 | 0.995 |
| (Ti+Nb+W+Zr+Zn)/(Si+B) | 0.000 | 0.000 | 0.000 | 0.000 | 0.000 | 0.000 | 0.000 | 0.167 |
| Refractive index (n_{d}) | 1.689 | 1.690 | 1.707 | 1.688 | 1.690 | 1.709 | 1.692 | 1.712 |
| Abbe number (ν_{d}) | 52.7 | 53.6 | 51.6 | 52.9 | 52.6 | 52.0 | 51.2 | 50.1 |
| Temperature coefficient of the relative refractive index [x 10⁻⁶°C⁻¹] | -0.8 | -1.0 | -0.9 | -0.9 | -0.6 | -0.6 | -2.0 | -0.5 |
| Specific gravity | 4.05 | 4.07 | 4.19 | 4.04 | 4.05 | 4.20 | 4.16 | 4.32 |
| Water resistance according to the powder method [class] | 2 | 3 | 2 | 2 | 2 | 2 | 2 | 2 |

**[Table 13]**

| (Units: mass%) | Example | | | | | Comparative Example |
|---|---|---|---|---|---|---|
| | B33 | B34 | B35 | B36 | B37 | c |
| SiO₂ | 16.93 | 18.21 | 12.28 | 6.33 | 24.48 | 8.03 |
| B₂O₃ | 10.00 | 18.32 | 22.17 | 26.05 | 21.63 | 35.76 |
| La₂O₃ | 3.00 | 17.43 | 23.80 | 30.20 | 15.61 | 19.29 |
| BaO | 44.23 | 44.75 | 37.68 | 30.60 | 37.28 | 22.24 |
| MgO | 1.00 | | | | | |
| CaO | 4.00 | | | | | 10.26 |
| SrO | | | | | | |
| K₂O | | | | | | |
| TiO₂ | | | | | | 1.38 |
| Nb₂O₅ | | | | | | |
| WO₃ | | | | | | |
| ZrO₂ | 3.00 | | | | | |
| ZnO | | | | | | 2.35 |
| Gd₂O₃ | | | | | | |
| Y₂O₃ | 16.25 | | 3.35 | 6.72 | | 0.60 |
| Yb₂O₃ | 1.50 | | | | | |
| Li₂O | | 0.49 | 0.25 | | 0.98 | 0.10 |
| Na₂O | | | | | | |
| Al₂O₃ | | 0.75 | 0.38 | | | |
| Sb₂O₃ | 0.10 | 0.06 | 0.10 | 0.10 | 0.02 | |
| Total | 100.0 | 100.0 | 100.0 | 100.0 | 100.0 | 100.0 |
| Mg+Ca+Sr+Ba | 49.23 | 44.75 | 37.68 | 30.60 | 37.28 | 32.50 |
| Mg+Ca+Sr+Ba+K | 49.23 | 44.75 | 37.68 | 30.60 | 37.28 | 32.50 |
| Si+B | 26.93 | 36.52 | 34.45 | 32.39 | 46.11 | 43.79 |
| Ti+Nb+W+Zr | 3.00 | 0.00 | 0.00 | 0.00 | 0.00 | 1.38 |
| (Mg+Ca+Sr+Ba+K)/ (Ti+Nb+W+Zr+Zn+Si+B) | 1.645 | 1.225 | 1.094 | 0.945 | 0.809 | 0.684 |
| La+Gd+Y+Yb | 20.75 | 17.43 | 27.15 | 36.92 | 15.61 | 19.89 |
| Li+Na+K | 0.00 | 0.49 | 0.25 | 0.00 | 0.98 | 0.10 |
| (Si+Al+Ti+Nb+Zr)/B | 1.992 | 1.035 | 0.571 | 0.243 | 1.132 | 0.263 |
| (Ti+Nb+W+Zr+Zn)/(Si+B) | 0.111 | 0.000 | 0.000 | 0.000 | 0.000 | 0.085 |
| Refractive index (n_{d}) | 1.720 | 1.676 | 1.696 | 1.716 | 1.650 | 1.689 |
| Abbe number (ν_{d}) | 50.0 | 55.3 | 54.1 | 53.3 | 58.4 | 53.5 |
| Temperature coefficient of the relative refractive index [x 10⁻⁶°C⁻¹] | -0.9 | 0.0 | 0.2 | 0.5 | 1.2 | 3.2 |
| Specific gravity | 4.04 | 3.82 | 3.95 | 4.09 | 3.40 | 3.53 |
| Water resistance according to the powder method [class] | 2 | 3 | 2 | 2 | 3 | 4 |

**[Table 14]**

| (Units: mass%) | Example | | |
|---|---|---|---|
| | B38 | B39 | B40 |
| SiO₂ | 19.41 | 20.90 | 19.41 |
| B₂O₃ | 7.49 | 5.99 | 8.99 |
| La₂O₃ | 19.23 | 19.23 | 19.23 |
| BaO | 52.17 | 52.17 | 52.17 |
| MgO | | | |
| CaO | | | |
| SrO | | | |
| K₂O | | | |
| TiO₂ | 0.10 | 0.10 | 0.10 |
| Nb₂O₅ | | | |
| WO₃ | | | |
| ZrO₂ | | | |
| ZnO | | | |
| Gd₂O₃ | | | |
| Y₂O₃ | | | |
| Yb₂O₃ | | | |
| Li₂O | | | |
| Na₂O | | | |
| Al₂O₃ | 1.50 | 1.50 | 0.00 |
| Sb₂O₃ | 0.10 | 0.10 | 0.10 |
| Total | 100.0 | 100.0 | 100.0 |
| Mg+Ca+Sr+Ba | 52.17 | 52.17 | 52.17 |
| Mg+Ca+Sr+Ba+K | 52.17 | 52.17 | 52.17 |
| Si+B | 26.90 | 26.90 | 28.40 |
| Ti+Nb+W+Zr | 0.10 | 0.10 | 0.10 |
| (Mg+Ca+Sr+Ba+K)/ (Ti+Nb+W+Zr+Zn+Si+B) | 1.93 | 1.93 | 1.83 |
| La+Gd+Y+Yb | 19.23 | 19.23 | 19.23 |
| Li+Na+K | 0.00 | 0.00 | 0.00 |
| (Si+Al+Ti+Nb+Zr)/B | 2.80 | 3.75 | 2.17 |
| (Ti+Nb+W+Zr+Zn)/(Si+B) | 0.00 | 0.00 | 0.00 |
| Refractive index (n_{d}) | 1.702 | 1.702 | 1.703 |
| Abbe number (ν_{d}) | 50.6 | 50.4 | 51.0 |
| Temperature coefficient of the relative refractive index [x 10⁻⁶°C⁻¹] | -1.3 | -1.3 | -1.4 |
| Specific gravity | 4.35 | 4.34 | 4.33 |
| Water resistance according to the powder method [class] | 3 | 2 | 2 |

As shown in the tables, the optical glasses of the examples all had a temperature coefficient of the relative refractive index within the range of +3.0 x 10⁻⁶ to -10.0 x 10⁻⁶ (°C⁻¹), which was within the desired range. In particular, the optical glasses of Examples (No. A1 to No. A53) all had a temperature coefficient of the relative refractive index within the range of +2.0 x 10⁻⁶ to -10.0 x 10⁻⁶ (°C⁻¹), more specifically within the range of 0 x 10⁻⁶ to -3.0 x 10⁻⁶ (°C⁻¹). Further, the optical glasses of Examples (No. B1 to No. B40) all had a temperature coefficient of the relative refractive index within the range of +3.0 x 10⁻⁶ to -5.0 x 10⁻⁶ (°C⁻¹), more specifically within the range of +1.2 x 10⁻⁶ to -3.0 x 10⁻⁶ (°C⁻¹). On the other hand, the glasses of the comparative examples all had a temperature coefficient of the relative refractive index greater than +3.0 x 10⁻⁶. Therefore, it can be understood that the optical glasses of the examples have lower values (approaching negative values) of the temperature coefficient of the relative refractive index then the glass of the comparative examples.

Further, the optical glasses of the Examples all had a refractive index (n_{d}) of 1.63 or more, more specifically 1.65 or more, and were within the desired range. In particular, the optical glasses of Examples (No. A1 to No. A53) all had a refractive index (n_{d}) of 1.68 or more.

Further, the optical glasses of the Examples all had an Abbe number (v_{d}) within the range of 40 to 62, and were within the desired range. In particular, the optical glasses of Examples (No. A1 to No. A53) all had an Abbe number within the range of 44 to 54. Further, the optical glasses of Examples (No. B1 to No. B40) all had an Abbe number within the range of 45 to 60, more specifically within the range of 45 to 59.

Further, the optical glasses of Examples formed stable glasses, and when producing the glass, devitrification did not readily occur.

In particular, the optical glasses of Examples (No. B1 to No. B40) all had chemical resistance (water resistance) according to the powder method of class 1 to 3, and were within the desired range.

Further, the optical glasses of Examples (No. B1 to No. B40) all had specific gravities of 5.00 or less, more specifically 4.5 or less, and were within the desired range.

Accordingly, it became clear that the optical glasses of the Examples had a refractive index (n_{d}) and Abbe number (v_{d}) within the desired range, and a low value of the temperature coefficient of the relative refractive index. Further, it became clear that, in particular, the optical glasses of Examples (No. B1 to No. B40) had a refractive index (n_{d}) and Abbe number (v_{d}) within the desired range, a low value of the temperature coefficient of the relative refractive index, and further, a small specific gravity.

From this, it can be inferred that the optical glasses of the Examples of the present invention contribute to size reduction of optical systems such as optical devices for vehicles or projectors or the like which are used in high temperature environments, and further contribute to correction of deviations and the like of the imaging characteristics due to temperature changes. Further, in particular, it can be inferred that the optical glasses of Examples (No. B1 to No. B40) can contribute to size reduction and weight reduction of optical systems such as optical devices for vehicles or projectors or the like which are used in high temperature environments, further contribute to correction of deviations and the like of the imaging characteristics due to temperature changes, and further, the glass will not readily tarnish even if steps such as washing or polishing or the like are carried out.

Furthermore, using the optical glasses of the Examples of the present invention, a glass block was formed, and by carrying out grinding and polishing of this glass block, a lens and a preform were formed. As a result, it was possible to stably process various forms of lenses and preforms.

The present invention was explained in detail with the objective of exemplification, but the examples of the present invention have only the intention of exemplification, and one skilled in the art could understand that many modifications are possible within the concept and scope of the present invention.

## Claims

1. An optical glass, comprising, in mass%,
an SiO₂ component of more than 0% to 30.0%,
a B₂O₃ component of more than 0% to 35.0%,
a BaO component of 20.0% to 63.0%,
and comprising
at least any of an Ln₂O₃ component (wherein Ln is one or more selected from the group consisting of La, Gd, Y, and Yb),
having a refractive index (n_{d}) of 1.63 or more, and an Abbe number (v_{d}) of 40 to 62, and wherein
a temperature coefficient (40 to 60°C) of a relative refractive index (589.29 nm), is within the range of +3.0 x 10⁻⁶ to -10.0 x 10⁻⁶ (°C⁻¹).

2. An optical glass according to claim 1, wherein, in mass%,
an MgO component is 0 to 5.0%,
a CaO component is 0 to 15.0%,
an SrO component is 0 to 15.0%,
a K₂O component is 0 to 10.0%,
a TiO₂ component is 0 to 10.0%
an Nb₂O₅ component is 0 to 10.0%
a WO₃ component is 0 to 10.0%
a ZrO₂ component is 0 to 10.0%
a ZnO component is 0 to 10.0%
a La₂O₃ component is 0 to 35.0%
a Gd₂O₃ component is 0 to 25.0%
a Y₂O₃ component is 0 to 25.0%
a Yb₂O₃ component is 0 to 10.0%
a Li₂O component is 0 to 3.0%
an Na₂O component is 0 to 5.0%
an Al₂O₃ component is 0 to 15.0%
a Ga₂O₃ component is 0 to 10.0%
a P₂O₅ component is 0 to 10.0%
a GeO₂ component is 0 to 10.0%
a Ta₂O₅ component is 0 to 5.0%
a Bi₂O₃ component is 0 to 10.0%
a TeO₂ component is 0 to 10.0%
a SnO₂ component is 0 to 3.0%
a Sb₂O₃ component is 0 to 1.0%,
and
wherein a content as F of a fluoride partially or completely substituting an oxide of one or two or more of each of the above elements is 0 to 10.0 mass%.

3. An optical glass according to claim 1 or 2, wherein
a total of the content of the SiO₂ component and the B₂O₃ component is 15.0% to 55.0%,
a total of the content of the RO component is 25.0% to 65.0% (wherein R is one or more selected from the group consisting of Mg, Ca, Sr, and Ba),
a total of the content of the Ln₂O₃ component is 10.0% to 45.0% (wherein Ln is one or more selected from the group consisting of La, Gd, Y, and Yb),
a total of the content of the Rn₂O component is 10.0% or less (wherein Rn is one or more selected from the group consisting of Li, Na, and K).

4. An optical glass according to any one of claims 1 to 3, wherein a total mass (RO + K₂O) is 25.0% to 65.0% (wherein R is at least one selected from the group consisting of Mg, Ca, Sr, and Ba).

5. An optical glass according to any one of claims 1 to 4, wherein a total mass TiO₂ + Nb₂O₅ + WO₃ + ZrO₂ is 10.0% or less.

6. An optical glass according to any one of claims 1 to 5, wherein a mass ratio (RO + K₂O) / (TiO₂ + Nb₂O₅ + WO₃ + ZrO₂ + SiO₂ + B₂O₃) is 1.00 to 3.00 (wherein R is at least one selected from the group consisting of Mg, Ca, Sr, and Ba).

7. An optical glass according to any one of claims 1 to 6, wherein a mass ratio (SiO₂ + Al₂O₃ + TiO₂ + Nb₂O₅ + ZrO₂) /B₂O₃ is 0.20 or more.

8. A preform consisting of the optical glass according to any one of claims 1 to 7.

9. An optical element consisting of the optical glass according to any one of claims 1 to 7.

10. An optical device provided with the optical element according to claim 9.
